(19) Europäisches Patentamt
European Patent Office
Office européen des brevets

(11) **EP 3 138 652 B1**

(12) **EUROPÄISCHE PATENTSCHRIFT**

(45) Veröffentlichungstag und Bekanntmachung des Hinweises auf die Patenterteilung:
**02.12.2020   Patentblatt 2020/49**

(51) Int Cl.:
*B23K 11/25* *(2006.01)*    *B23K 11/26* *(2006.01)*

(21) Anmeldenummer: **16187607.3**

(22) Anmeldetag: **07.09.2016**

(54) **ELEKTRISCHES SCHWEISSVERFAHREN**

ELECTRIC WELDING METHOD

PROCÉDÉ DE SOUDURE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.09.2015   DE 102015114957**

(43) Veröffentlichungstag der Anmeldung:
**08.03.2017   Patentblatt 2017/10**

(73) Patentinhaber: **Rusch, Hans-Jürgen**
**28876 Oyten (DE)**

(72) Erfinder:
• **RUSCH, Hans-Jürgen**
**28876 Oyten (DE)**
• **ZSCHETZSCHE, Jörg**
**01129 Dresden (DE)**
• **HERTEL, Martin**
**01097 Dresden (DE)**
• **MATHISZIK, Christian**
**01328 Dresden (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**EP-A1- 2 628 561       WO-A1-98/45078**
**DE-T2- 69 626 429**

EP 3 138 652 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zum Durchführen und Überwachen eines elektrischen Schweißverfahrens. Außerdem betrifft die vorliegende Erfindung eine Vorrichtung zum Durchführen und Überwachen eines elektrischen Schweißverfahrens.

Das Kondensatorentladungsschweißen ist ein Beispiel eines elektrischen Schweißverfahrens und wird von der Fachwelt zu den Widerstandsschweißverfahren gezählt. Hierbei entsteht eine Verbindung zwischen zwei Fügepartnern, also beispielsweise zwischen zwei zusammenzuschweißenden Blechen, durch ohmsche Erwärmung der Fügestelle.

Bei einem reinen Widerstandspressschweißen, das vereinfacht auch als Widerstandsschweißen bezeichnet werden kann, wird das Material an der Fügestelle aufgeschmolzen und es bildet sich eine Schweißlinse, die durch Diffusion der flüssigen Phasen beider Fügepartner entsteht. Diese Schweißlinse prägt auch den Charakter der entstandenen Verbindung. Um die Qualität der Verbindung zu prüfen, wird oftmals die Ausdehnung der Linse vermessen. Das kann in Schliffen oder durch Ausknöpfproben erfolgen.

Beim Kondensatorentladungsschweißen, obwohl dies zu den Widerstandsschweißverfahren gezählt wird, werden die Fügepartner eher selten aufgeschmolzen. Stattdessen versetzen die erreichten Temperaturen das Material nur in einen teigigen Zustand, was eine Linsenbildung verhindert. Eine solche Verbindung wird im Querschliff oft als Bindefehler bewertet, weil keine Linse vorhanden ist. Außerdem zeigt sich oft eine deutlich erkennbare Trennlinie zwischen den Fügepartnern. Deshalb ist die Beurteilung von Schliffbildern, die im Falle des typischen Widerstandsschweißens üblich ist, eher als problematisch einzuschätzen. Stattdessen sind Verfahren der zerstörenden Prüfung auf die Verbindung anzuwenden, die die Festigkeit der Verbindung nachweisen könnten. Deshalb wäre es wünschenswert, dieses Schweißen mit teigiger Phase zu erkennen, um Fehlinterpretationen der Güte des Schweißvorgangs auszuschließen, weil sich beispielsweise keine Linse gebildet hat.

Am vorteilhaftesten böten sich dazu Verfahren zur Prozessüberwachung an. Als anerkannter Stand der Technik werden dazu die Größen Stromanstiegs- und Schweißzeit, Fläche unter der Stromkurve, Spitzenstrom, Krafteinbruch und Setz- und Absenkweg überwacht.

Aus dem Dokument EP 2 628 561 A1 ist ein Schweiß-Qualitäts-Klassifizierungs-Gerät bekannt, das bei einem Pressschweißverfahren anhand von erfassten Messdaten eine Schweiß-Qualitäts-Klassifizierung vornimmt bzw. die Qualität des Schweißvorgangs bewertet.

Aus dem Dokument WO 98/45078 A1 ist ein Gerät zum Messen der Qualität eines Schweißvorgangs bekannt, das den Schweißstrom und die Schweißspannung erfasst und mit einem iterativen Auswertungsalgorithmus die Qualität des Schweißvorgangs bewertet.

Aus dem Dokument DE 696 26 429 T2 ist eine Steuervorrichtung für eine Widerstandsschweißvorrichtung und insbesondere eine Steuervorrichtung für eine Punktschweißvorrichtung bekannt, die den Schweißstrom anhand einer Schweißlinsengröße während eines Schweißvorgangs steuert.

Eine Unterscheidung auf Schweißen mit flüssiger Phase, in deren Resultat eine Linse entstehen muss, und Schweißen mit teigiger Phase, die ohne Linsenbildung abläuft, ist auf der Basis dieser Überwachung nicht möglich, da sich die Prozessunterschiede in den genannten Größen nicht wiederspiegeln.

Selbst für die Beurteilung der Qualität der Verbindung erweist sich die Interpretation der gemessenen Werte und Parameterverläufe als problematisch, weil die Festlegung der zulässigen Toleranzen empirisch auf der Grundlage von Schweißversuchen erfolgt und die Toleranzen meist größer festgelegt werden müssen, als Prozessstörungen zu Abweichungen der Parameter führen. Lediglich massive Störungen während des Schweißvorgangs, die oft auch optisch an den verschweißten Fügepartnern zu erkennen sind, wie bspw. Spritzerrückstände, Schmauch-/Brandspuren, zu geringe Schweißwirkung. Somit kann mithilfe der Überwachungsverfahren nach dem gegenwärtigen Stand der Technik kaum auf Qualitätsabweichungen, insbesondere nicht auf deren Ursachen, geschlossen werden.

Der vorliegenden Erfindung liegt somit die Aufgabe zugrunde, wenigstens eines der oben genannten Probleme zu adressieren. Insbesondere soll eine Lösung vorgeschlagen werden, die es ermöglicht, ein Schweißen mit teigiger Phase zu erkennen. Zumindest soll zu bisher bekannten Lösungen eine Alternative vorgeschlagen werden.

Erfindungsgemäß wird ein Verfahren nach Anspruch 1 vorgeschlagen. Dieses Verfahren ist auf das Durchführen und Überwachen eines elektrischen Schweißverfahrens zum Verbinden zweier Fügepartner gerichtet. Solche Fügepartner können insbesondere jeweils Bleche sein, die miteinander verschweißt werden sollen. Zwei Fügepartner werden hier als Fügepartnersatz bezeichnet. Grundsätzlich kann ein Fügepartnersatz aber auch mehr als zwei Fügepartner umfassen, beispielsweise können drei Bleche an einer Stelle zusammengeschweißt werden. Der häufigste Anwendungsfall, der hier auch zur Erläuterung zugrunde gelegt wird, dürfte aber das Verschweißen zweier Fügepartner miteinander sein. Alle Erläuterungen hierzu sind grundsätzlich auch auf das Verschweißen von mehr als zwei Fügepartnern sinngemäß übertragbar.

Gemäß diesem Verfahren wird zunächst ein Schweißvorgang durchgeführt, wobei ein elektrischer Schweißstrom mittels zweier Elektroden durch einen zwischen den Elektroden angeordneten Fügebereich der wenigstens zwei Fügepartner des Fügepartnersatzes fließt. Es werden also insbesondere zwei Fügepartner, wie beispielsweise zwei Bleche, zwischen den beiden Elektroden angeordnet und dann fließt ein Schweißstrom von der einen zur anderen Elektrode durch den entsprechenden Fügebereich. Meist üben hierbei die Elektroden auch einen mechanischen Druck auf die Fügepartner im Fügebereich aus, um sie zusammenzupressen. Entsprechend kann dieses Schweißverfahren auch als Pressschweißverfahren bezeichnet werden.

Weiterhin wird wenigstens ein sich zeitlich ändernder Systemzustand des Schweißvorgangs aufgenommen. Vorzugsweise werden meist mehrere sich zeitlich ändernde Systemzustände aufgenommen. Hierzu gehören insbesondere der Schweißstrom und die elektrische Spannung zwischen den Elektroden.

Weiterhin wird vorgeschlagen, den durchgeführten Schweißvorgang in Abhängigkeit des Verlaufs des wenigstens einen Systemzustandes zu identifizieren. Es wird also der Verlauf des wenigstens einen Systemzustands ausgewertet und anhand dessen festgestellt, was für ein Schweißvorgang vorgelegen hat. Insbesondere beginnt ein solches Verfahren mit dem Durchführen eines ersten Schweißvorgangs, bei dem solche Verläufe von einem oder mehreren Systemzuständen aufgenommen und entsprechend ausgewertet werden.

Anhand dieser Auswertung kann dann erkannt werden, was für ein Schweißvorgang vorliegt.

Damit wird eine Ausgangslage geschaffen, in der der Schweißvorgang überprüft werden kann. Voraussetzung ist hierbei, dass der entsprechende Schweißvorgang besonders der Art nach identifiziert wurde. Erst zusammen mit dieser Identifikation lassen sich auch Aussagen über die Qualität ableiten, zumindest besser ableiten als ohne eine solche vorgeschaltete Identifizierung.

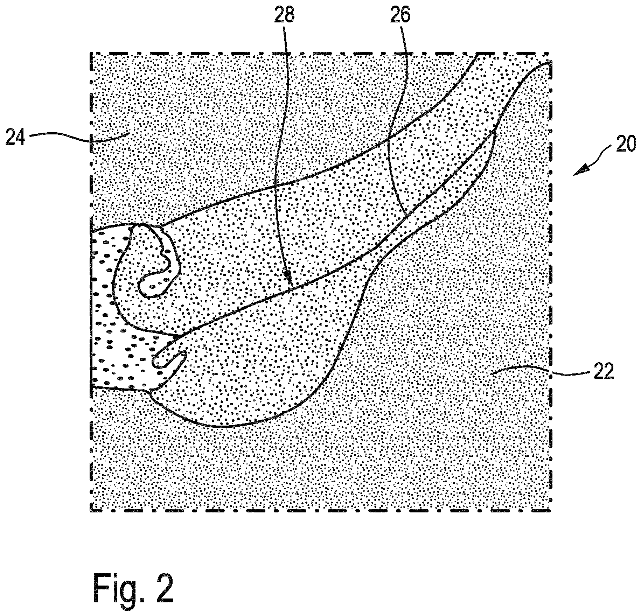

Im Gegensatz zum bisherigen Prozessverständnis geht das erfindungsgemäß betrachtete Kurzzeitschweißen mit hoher Wärmestromdichte (KShW) davon aus, dass die Verbindung nicht unbedingt durch ohmsche Erwärmung der Fügezone bis in den plastisch verformbaren oder schmelzflüssigen Zustand hinein entstehen muss. Stattdessen wurde erkannt, dass in der Fügezone, wie beispielsweise die Fügezone 20 im Bereich der Trennlinie 26 der Figur 2, während des Schweißvorgangs ein Lichtbogen bzw. ein Plasma oder Metalldampf entsteht, der die Oberflächen der Fügepartner aktiviert. Diese neue Erkenntnis begründet sich auf der beim KShW kurzzeitig auftretenden, sehr hohen Leistungsdichte von über $10^6$ W/cm$^2$, was durch Messungen nachgewiesen wurde. Bei diesen Leistungsdichten wird insbesondere die Spitze eines Buckels auf bis zu 2.500 °C erwärmt, wodurch das Material verdampft mit anschließender Ionisation. Durch die Erwärmung können auch die Metalloberflächen der Fügepartner aktiviert bzw. gereinigt werden. Ob tatsächlich ein Lichtbogen, ein Plasma oder ein Metalldampf entstanden ist, ist für die Auswertung nicht von Bedeutung. In jedem Fall ist eine hohe Temperatur aufgetreten. Wichtig ist die Abgrenzung gegen ein Widerstandspressschweißen. Am geeignetsten scheint die Annahme, dass ein Metalldampf entstanden ist und somit ein Metalldampfpressschweißen vorlag. Es wird somit unterschieden zwischen Widerstandsschweißen einerseits und Metalldampfschweißen andererseits. Betrachtungen, die von einem Lichtbogenpressschweißen ausgehen, kommen somit zum selben Ergebnis.

Ausgehend von diesem bisher noch nicht in Betracht gezogenen Prozessverständnis wurde erkannt, dass die Art der Verbindungsbildung davon abhängt, ob diese im flüssigen Zustand, insbesondere Diffusion flüssiger Phasen oder Bildung einer Schweißlinse, als Widerstandsschweißprozess oder im festen Zustand, besonders durch Annäherung der aktivierten Oberflächen auf atomare Abstände durch lokale plastische Verformung, als Metalldampfpressschweißen erfolgt. Es ist davon auszugehen, dass beide Prozesse in vier wesentlichen Stufen ablaufen, die wiederum durch typische Größen gekennzeichnet sind, sich aber in einzelnen Phasen unterscheiden. Diese im Wesentlichen vier Stufen sind der Einfachheit halber in der nachfolgenden Tabelle gegenübergestellt:

| Prozessstufe | KShW als Widerstandspressschweißen | KShW als Metalldampfpressschweißen | charakteristische Größen |
|---|---|---|---|
| Kraftaufbau | Plastische Verformung der Fügeteile; Konditionierung der Kontaktfläche: • Ausbildung der scheinbaren Kontaktfläche (Aufstandsfläche) • Ausbildung der tatsächlichen Kontaktfläche (metallisch und quasimetallischer Kontakt | | Setzweg Kontaktwiderstand |
| Stromfluss I | Stromfluss mit ausreichend hoher Stromdichte • ohmsche Erwärmung der Fügezone mit einhergehender Verringerung der Festigkeit • Aufschmelzen der Fügepartner in der Fügezone | Stromfluss mit sehr hoher Stromdichte insbesondere wenn ein Buckel den Strom konzentriert • ohmsche Erwärmung der Fügezone mit einhergehender Verringerung der Festigkeit • Metalldampfbildung • Reinigung und Aktivierung der Oberfläche | Schweißstrom, Spannung und elektrischer Widerstand an der Fügestelle |

(fortgesetzt)

| Prozessstufe | KShW als Widerstandspressschweißen | KShW als Metalldampfpressschweißen | charakteristische Größen |
|---|---|---|---|
| Stromfluss II | Stromfluss mit (in der Regel) gleichbleibender Stromdichte Bilden der Schweißlinse und deren Wachstum im Durchmesser Ausbreiten der WEZ | Stromfluss mit sich verringernder Stromdichte Abbrechen der Metalldampfbildung weiteres Umformen der Fügestelle | Schweißstrom, Spannung und elektrischer Widerstand an der Fügestelle; Nachsetzweg Kraftverlauf |
| Nachpressen | Abkühlen und Erstarren der Schmelze | Mechanisches Verdrängen von Material aus der Fügezone Vergrößerung der Oberfläche Ausbildung des Stoffschlusses durch Annäherung der aktivierten (von Verunreinigungen und Oxiden befreiten) Oberflächen auf atomare Abstände | Nachsetzweg |

Demnach bildet die erste Stufe den Kraftaufbau, die in beiden Verfahren gleich abläuft. Hier erfolgt eine plastische Verformung der Fügeteile, insbesondere, wenn ein Buckel vorhanden ist. Dabei erfolgt eine Konditionierung der Kontaktfläche. Die sich ausbildende scheinbare Kontaktfläche, die auch als Aufstandsfläche bezeichnet werden kann, und sich aus der Berührungsfläche der beiden Fügepartner ergibt, ist von der tatsächlichen Kontaktfläche zu unterscheiden. Letztere ist, besonders wegen mikroskopischer Unebenheiten und isolierender Partikel, meist nur ein Bruchteil der ersteren und ergibt sich aus dem tatsächlichen metallischen und quasi metallischen Kontakt. Charakteristische Größen dieser ersten Stufe sind der Setzweg, nämlich insbesondere der Weg, den die Elektroden bei der plastischen Verformung der Fügepartner zurücklegen, und der Kontaktwiderstand, der sich dabei ergibt.

In der zweiten Stufe (Stromfluss I) beginnt der Stromfluss. Beim Widerstandsschweißen ist die Stromdichte so groß, dass die ohmsche Erwärmung zum Aufschmelzen der Fügezone führt. Während der Erwärmung kommt es zu einer Verringerung der Festigkeit und die Elektroden pressen das Material der Fügepartner zusammen, was am Ende als Elektrodeneindruck sichtbar wird. Beim Metalldampfpressschweißen ist der Strom so hoch, dass eine sehr hohe Stromdichte entsteht, was durch eine speziell gestaltete Oberfläche der Fügepartner, z. B. durch einen Buckel, erreicht wird. Dabei erfolgt eine ohmsche Erwärmung der Fügezone mit einhergehender Verringerung der Festigkeit. Gleichzeitig entsteht eine Metalldampfbildung. Außerdem tritt eine Reinigung und Aktivierung der Oberfläche auf. Als charakteristische Größe kann hier der Schweißstrom und auch die Spannung sowie die verknüpfte Größe elektrischer Widerstand an der Fügestelle angesehen werden.

Die dritte Stufe (Stromfluss II) ist für das Widerstandsschweißen die entscheidende, weil die meist gleichbleibende Stromdichte den Bereich der Schmelze ausweitet, was sich als ein Dickenwachstum der ausgebildeten Linse auswirkt. Durch Wärmeleitung im Material der Fügepartner weitet sich die Wärmeeinflusszone am Rande der Schmelze aus.

Beim Metalldampfpressschweißen liegt ein Stromfluss mit sich verringernder Stromdichte vor und es erfolgt noch ein weiteres Umformen des Buckels. Auch hier sind der Schweißstrom und die Spannung sowie der elektrische Widerstand an der Fügestelle charakteristische Größen. Hier kommt aber ein Nachsetzweg hinzu, der eine entsprechende Nachsetzbewegung der Elektroden betrifft und insoweit eine charakteristische Größe für diese dritte Stufe bildet. Auch der Kraftverlauf der Presskraft von den Elektroden auf den Fügebereich bzw. die Fügepartner ist eine charakteristische Größe.

Schließlich bildet das Nachpressen die vierte Stufe. Beim Widerstandspressschweißen kommt es lediglich noch zum Abkühlen der Schmelze, die so erstarrt und damit die Schweißlinse in ihren Dimensionen festlegt.

Beim Metalldampfpressschweißen, das meistens mit einem Buckel erfolgt, wird dieser weiter umgeformt. Es wird auch Material aus der Fügezone verdrängt und es vergrößert sich die Oberfläche. Hier bildet sich nun der Stoffschluss dadurch aus, dass sich die aktivierten Oberflächen der beiden Fügepartner auf atomare Abstände annähern. Diese Aktivierung der Oberflächen beinhaltet besonders, dass diese von Verunreinigungen und Oxiden befreit wurden. Als charakteristische Größe dieser vierten Stufe kann noch der Nachsetzweg genannt werden. Demzufolge ist beim Metalldampfpressschweißen diese vierte Phase die entscheidende für den Schweißvorgang.

Entscheidende Bedeutung kommt beim Metalldampfpressschweißen somit der Metalldampfbildung zu. Tritt sie nicht auf, wird die Oberfläche nicht gereinigt und aktiviert und die Verbindung kann Unregelmäßigkeiten wie Bindefehler aufweisen, obwohl bisher übliche Überwachungsgrößen, wie beispielsweise der Einsinkweg, innerhalb festgelegter Toleranzen liegen.

Aufbauend auf dieser Erkenntnis, nämlich dem Prozessverständnis des Kurzzeitschweißens mit hoher Wärmestromdichte als Metalldampfpressschweißen, schlägt die Erfindung ein Verfahren zum sicheren Detektieren und Qualifizieren der Metallplasmabildung in der Fügezone vor, zumindest gemäß einer Ausführungsform. Eine hinreichend ausgebildete Metalldampfbildung, die mit ihrer reinigenden Wirkung die gesamte Oberfläche der Fügezone erfasst, wird als Garant oder zumindest wichtiges Merkmal für das Beseitigen von Verschmutzungen und Oxiden von der gesamten Oberfläche der Fügezone angesehen. Das ist somit ein wichtiger Indikator für die qualitätsgerechte Ausbildung einer stoffschlüssigen Fügeverbindung.

Erst die Erkenntnis der Art des durchgeführten Schweißvorgangs ermöglicht somit die weitere qualifizierte Interpretation der aufgenommenen Systemzustände.

Vorzugsweise wird somit vorgeschlagen, die Art des durchgeführten Schweißvorgangs zu identifizieren. Die Identifikation, die in Abhängigkeit des Verlaufs des wenigstens einen Schweißzustands vorgenommen wird, kann dadurch zu einer Weichenstellung für das sich anschließende Verfahren genutzt werden. Es wird dadurch Klarheit geschaffen, welches Verfahren überhaupt vorliegt und entsprechend kann sowohl die Einstellung der Schweißparameter als auch die Durchführung eines Prüfverfahrens je nach Ergebnis dieser Identifikation grundlegend unterschiedlich ausfallen. Besonders bei der Anwendung eines nachfolgenden Prüfverfahrens kann dieses auch der Art nach gänzlich unterschiedlich gewählt werden.

Vorzugsweise wird bei der Identifizierung der Art des durchgeführten Schweißvorgangs zwischen zwei Schweißverbindungen unterschieden, nämlich ob die Schweißverbindung durch ein Widerstandspressschweißen erfolgt ist, oder durch ein Metalldampfpressschweißen. Beide Verfahren haben zunächst gleiche Ausgangsbedingungen und werden bspw. als Buckelschweißverfahren ausgeführt. Der tatsächliche Schweißvorgang kann dann aber als Widerstandspressschweißen oder als Metalldampfpressschweißen ablaufen, ohne dass bekannt ist, welche dieser Varianten vorlag.

Entsprechend entstehen auch unterschiedliche Schweißverbindungen. Es liegt nämlich im Falle des Widerstandspressschweißens ein Schweißen mit Aufschmelzen im Fügebereich der Fügepartner vor. Im Falle eines Metalldampfpressschweißens werden die Fügepartner unter starkem Druck und bei aktivierter Oberfläche miteinander verbunden. Das geht häufig unter Bilden eines eher teigigen Zustandes einher.

Diese beiden genannten Schweißverbindungen sind grundsätzlich unterschiedlich, so dass es wichtig ist, dass durch die vorgeschlagene Identifizierung zunächst, besonders in einem ersten Schritt, der Bindungsmechanismus identifiziert wird. Besonders wird hierdurch eine Unterscheidung zwischen Metalldampfpress- und Widerstandspressschweißverfahren möglich. Eine solche Unterscheidung ist besonders bei allen Buckelschweißverfahren wichtig, da bereits die Variation einzelner Prozessparameter, die auch schleichend vonstattengehen kann, den Wechsel von einem Verfahren zum anderen bedeuten kann. Daher wird vorgeschlagen, das jeweilige Verfahren zu identifizieren. Insoweit ist ein Metalldampfpressschweißverfahren einerseits und ein Widerstandspressschweißverfahren andererseits jeweils eine Art des durchgeführten Schweißvorgangs.

Das vorgeschlagene Herangehen ermöglicht auch eine Auskunft über den entstandenen Bindungsmechanismus und gewährleistet somit die Auswahl des jeweils richtigen Prüfverfahrens oder der jeweils richtigen Prüfverfahren. Wird der Schweißvorgang, der hier und nachfolgend zusammenfassend als Kurzzeitschweißen mit hoher Wärmestromdichte (KShW) bezeichnet wird, als Widerstandspressschweißverfahren identifiziert, wobei auch der Begriff Widerstandsschweißverfahren der Einfachheit halber häufig verwendet wird, muss sich eine Schweißlinse bilden, die bewertet werden kann. Erfolgt hingegen die Schweißung als Metalldampfpressschweißverfahren, entsteht eine Verbindung auf der Basis atomarer Bindungskräfte, die wiederum abweichende Prüfverfahren erfordern. Insbesondere kann hier keine Schweißlinse ausgewertet werden, weil bei diesem Metalldampfpressschweißverfahren keine Linse entsteht. Würde doch das Entstehen einer Schweißlinse als Qualitätskriterium gefordert, müsste folglich von einer schlechten Schweißverbindung ausgegangen werden, obwohl die Schweißverbindung durchaus hinreichend, sogar optimal sein kann.

Vorzugsweise wird vorgeschlagen, dass das Identifizieren des Schweißvorgangs beinhaltet, zu ermitteln, ob sich eine Schweißlinse gebildet hat und daher ein Aufschmelzen im Fügebereich der Fügepartner erfolgt ist, oder ob sich keine Schweißlinse gebildet hat und daher eine Verbindung der Fügepartner im Fügebereich über Annäherung auf Atomabstand erfolgt ist und insbesondere unter Bildung von Metalldampf erfolgt ist, bei dem die Fügepartner im Fügebereich zunächst aktiviert wurden und sich soweit angenähert haben, und sich über atomare Bindungskräfte miteinander verbunden haben.

Es wird somit vorgeschlagen, konkret diese aufgeführten Unterschiede zu identifizieren und damit kann dann auf die Art des Schweißvorgangs geschlossen werden. Dabei wird vorgeschlagen, eine solche Art des Schweißverfahrens in Abhängigkeit des Verlaufs des wenigstens einen Systemzustandes zu ermitteln. Mögliche Kriterien, dies aus Verläufen des Systemzustandes zu erhalten, werden unten noch geschildert.

Sollte es nicht möglich sein, eine eindeutige Zuordnung zu einer der beiden Arten zu machen, besonders weil beide Vorgänge mit wachsender Energiedichte ineinander übergehen und somit im Übergangsbereich bei der Auswertung Merkmale auf beide Arten hindeuten, kann der Schweißvorgang mit geänderten Parametern wiederholt werden, z.B. mit einem um 10% erhöhten oder verringerten Schweißstrom.

Gemäß einer Ausführungsform wird vorgeschlagen, dass in Abhängigkeit davon, welcher Schweißvorgang identifiziert wurde, insbesondere welche Art des Schweißvorgangs identifiziert wurde, ein Prüfverfahren zum Prüfen der Qualität der Schweißverbindung ausgewählt wird. Hier kommt insbesondere in Betracht, bei Identifikation eines Schweißvorgangs als Widerstandsschweißverfahren, bei dem sich eine Schweißlinse bildet, ein Prüfverfahren zu wählen, das die Schweißlinse untersucht. Insbesondere kommt hier in Betracht, im Bereich dieser Linse einen Schliff vorzusehen oder nach einem Öffnen der Schweißverbindung den entstandenen Butzen bei einem Ausknöpfbruch bzw. die Bruchfläche bei einem Scherbruch zu vermessen. Wird hingegen ein Schweißvorgang als Metalldampfpressschweißen identifiziert, wird ein Prüfverfahren gewählt, das keine Linse bewertet.

Somit wird vorzugsweise auch vorgeschlagen, dass zum Identifizieren des durchgeführten Schweißvorgangs als Systemzustände der Schweißstrom einerseits und die elektrische Spannung an dem Fügebereich zwischen den Elektroden andererseits verwendet werden, wobei beispielsweise der Schweißstrom die Abszisse bildet und die Spannung zwischen den Elektroden die Ordinate. Diese werden dann als Zustandsverlauf in einem gemeinsamen Strom-Spannungs-Diagramm dargestellt. Abhängig von diesem Zustandsverlauf wird der Schweißvorgang identifiziert und bewertet.

Somit kann über diese Auswertung des wenigstens einen Systemzustands nicht nur die Art des Schweißvorgangs erkannt werden, sondern die Auswertung lässt auch eine Beurteilung der Qualität zu. Eine solche Auswertung wird besonders vorgeschlagen, wenn aufgrund der identifizierten Art des Schweißvorgangs keine Linsenbildung vorliegt und somit auch zur Beurteilung der Qualität eine Linse nicht ausgewertet werden kann. Über die Auswertung eines entsprechenden Systemzustandsverlaufs kann nun eine Beurteilung der Qualität vorgenommen werden.

Besonders wird somit auch ein Verfahren vorgeschlagen, bei dem in einer ersten Stufe eine Unterscheidung der Schweißverfahren durchgeführt wird, insbesondere eine Unterscheidung zwischen Metalldampfpressschweißverfahren einerseits und Widerstandspressschweißverfahren andererseits.

In einem nächsten Schritt oder einer zweiten Stufe kann das vorgeschlagene Verfahren Auskunft über den entstandenen Bindungsmechanismus geben und somit die Auswahl der richtigen Prüfverfahren gewährleisten.

In einem dritten Schritt oder einer dritten Stufe kann schließlich aufgrund des Verlaufs der Strom-Spannungs-Zustandskurve eine Beurteilung der Qualität der Verbindung vorgenommen werden. Eine solche Auswertung ist zudem auch durch einen Prozessrechner realisierbar und benötigt keine Zerstörung der Schweißstelle. Insoweit kann eine solche Beurteilung der Qualität auch online durchgeführt werden. Insbesondere wird nämlich vorgeschlagen, die Art der Verschweißung zu identifizieren, sich Klarheit über den Bindungsmechanismus zu machen und schließlich eine Beurteilung der Qualität vorzunehmen, um dann, im Grunde in einem vierten Schritt, möglicherweise Parameter nachzustellen, um den Schweißprozess zu verbessern. Im Grunde ist dies ein Teil der Stufe drei, die eine Beurteilung der Qualität der Verbindung zulässt. Schließlich gibt eine solche Beurteilung der Qualität gegebenenfalls einen Anlass, die Parameter des Schweißvorgangs anzupassen.

Es wird auch vorgeschlagen, bei der Anpassung der Parameter zur Verbesserung des Schweißvorgangs, die Art des Schweißvorgangs zu berücksichtigen. Mit der Wahl und dann Einstellung etwaiger Schweißparameter kann gegebenenfalls auch eine Auswahl getroffen werden, welcher Schweißvorgang der Art nach durchgeführt werden soll.

Gemäß einer weiteren Ausführungsform wird vorgeschlagen, dass nach dem Schweißvorgang, besonders nach einem ersten Schweißvorgang, ein weiterer Schweißvorgang für einen weiteren Fügepartnersatz durchgeführt wird, nämlich für die gleichen oder nahezu identischen Fügepartnersätze. Dabei wird dann wenigstens ein Schweißparameter in Abhängigkeit des identifizierten ersten Schweißvorgangs eingestellt, um den weiteren Schweißvorgang gegenüber dem zuvor durchgeführten Schweißvorgang zu verbessern. Insbesondere wird eine solche Verbesserung in der Anfangsphase vorgeschlagen, wenn eine neue Charge eines bestimmten Fügepartnersatzes verschweißt werden soll und zunächst ein erster Fügepartnersatz mit einer ersten Schweißung verschweißt wurde. Diese erste Schweißung kann auch eine Testschweißung sein. Es werden dann die beschriebenen Auswertungen vorgenommen und gegebenenfalls sukzessive der Schweißvorgang verbessert. Es können auch nach und nach weitere Schweißvorgänge mit den gleichen Untersuchungen und ggf. entsprechenden Variationen der Schweißparameter durchgeführt werden.

Vorzugsweise wird wenigstens ein Schweißparameter in Abhängigkeit davon eingestellt, ob ein Widerstands- oder Metalldampfpressschweißen erfolgt ist. Schweißparameter können beispielsweise die Schweißzeit, die Höhe des Schweißstroms oder, beim Kondensatorentladungsschweißen, die Ladespannung in dem Kondensator sein. Je nachdem, ob ein Widerstands- oder ein Metalldampfpressschweißen erfolgt ist, kann eine Verbesserung in einem Fall durch eine Erhöhung des Schweißparameters zu erwarten sein, während in einem anderen Falle eine Erhöhung desselben Schweißparameters den Schweißvorgang möglicherweise nicht verbessert. Besonders sollte eine Veränderung des wenigstens einen Schweißparameters so erfolgen, dass der Schweißvorgang der Art nach derselbe bleibt und nicht zu einer anderen Art des Schweißvorgangs führt.

Gemäß einer Ausführungsform wird vorgeschlagen, dass zwei Systemzustände in einem gemeinsamen Zustandsverlauf dargestellt werden. Darauf basierend wird dann eine oder mehrere der folgenden Eigenschaften ausge-

EP 3 138 652 B1

wertet:

- ob der Zustandsverlauf eine Schleife bildet,

- bei welchen Zustandswerten sich der Zustandsverlauf selbst schneidet, wenn er eine Schleife bildet,

- wie groß der Flächeninhalt einer Schleife des Zustandsverlaufs ist, insbesondere im Verhältnis zum Flächeninhalt einer Fläche, die zwischen dem Zustandsverlauf und wenigstens einer Achse des Koordinatensystems eingeschlossen ist,

- zu welchen Werten des einen Systemzustands der beiden Systemzustände der andere Systemzustand einen maximalen Wert aufweist,

- bei welchen Systemzustandswerten sich der eine Systemzustand im Vergleich zum anderen Systemzustand am stärksten ändert und/oder

- bei welchem Wert des Schweißstroms die elektrische Spannung an den Elektroden einen maximalen Wert annimmt, wenn der Schweißstrom und die elektrische Spannung die beiden Systemzustände bilden.

Ob der Zustandsverlauf hierbei eine Schleife bildet, ist ein Kriterium und es wurde erkannt, dass eine Schleifenbildung darauf hindeutet, dass sich Metalldampf ausgebildet hat und somit die Oberflächen aktiviert werden und der Bindungsmechanismus über die atomare Annäherung beider Fügepartner erfolgt und folglich keine Linse entsteht.
Als weiteres Kriterium wird vorgeschlagen, zu prüfen, bei welchen Zustandswerten sich der Zustandsverlauf selbst schneidet, wenn er eine Schleife bildet. Damit kann auch eine qualitative Auswertung einer Situation mit Schleifenbildung vorgesehen werden. Das feststellen der Zustandswerte, bei denen sich der Zustandsverlauf schneidet, zeichnet sich besonders dadurch aus, dass es klar identifizierbar ist. Die Zustandswerte, also das Wertepaar, bei dem ein Schnittpunkt vorliegt, ist meist sehr gut und präzise erkennbar. Die Aussage hieraus kann von Situation zu Situation anders ausfallen, aber beispielsweise durch Vorversuche eingeordnet werden.
Als weiteres Kriterium wird vorgeschlagen, die Größe des Flächeninhalts einer Schleife des Zustandsverlaufs zu bestimmen. Auch hier kann eine qualitative Auswertung vorgenommen werden. Die Bestimmung des Flächeninhaltes ist bei Aufnahme des Zustandsverlaufs in einem Prozessrechner problemlos bestimmbar. Für eine Bewertung wird besonders vorgeschlagen, ein Verhältnis dieser Fläche der Schleife zu dem Flächeninhalt einer Fläche zu bilden, die zwischen dem Zustandsverlauf und wenigstens einer Achse eingeschlossen ist bzw. sich dadurch ausbildet. Dadurch kann auch ein Kriterium festgelegt werden, das von absoluten Werten unabhängig ist. Der Wert des Flächeninhalts, absolut oder relativ, kann als Maß dafür angesehen werden, wie stark sich der Metalldampf ausbildet und wie stark seine Wirkung ist. Davon wiederum hängt ab, ob die Oberflächen ausreichend gereinigt bzw. aktiviert werden oder ob die Wirkung der Metalldampfbildung beispielsweise zu stark ist und es zu einem übermäßigen Materialauswurf (Spritzer) kommt. Somit können aus der Größe der Schleife Rückschlüsse auf die Qualität des Schweißvorgangs gezogen werden.
Vorzugsweise wird auch vorgeschlagen, Maximalwerte auszuwerten, insbesondere die Position eines Maximalwertes eines der Zustände bezogen auf den Wert des zugehörigen anderen Zustands. Im Falle einer Strom-Spannungs-Kurve hieße dies beispielsweise, bei welchem Strom die Spannung ihren Maximalwert hat oder bei welcher Spannung der Strom seinen Maximalwert hat. Es können auch mehrere Maximalwerte, also lokale Maxima, ausgewertet werden. Auch eine solche Auswertung ist vergleichsweise einfach durchführbar, wenn der Prozessrechner diese Daten vorliegen hat, was einfach realisierbar ist.
Weiterhin wird vorgeschlagen, die Änderung eines Systemzustands im Vergleich zu dem anderen Systemzustand zu untersuchen. Dies sind insbesondere in einer grafischen Darstellung einer solchen Zustandskurve hohe oder flache Steigungen. Ändert sich der Systemzustand, der an der Ordinate abgetragen ist, schnell gegenüber dem Systemzustand, der an der Abszisse abgetragen ist, so ergibt sich eine sehr starke Steigung. Ändert sich der Wert, der über die Abszisse aufgetragen ist aber sehr schnell im Vergleich zu dem Wert, der über die Ordinate aufgetragen ist, so ergibt sich eine sehr flache Steigung. Dazu kann somit eine Auswertung vorgenommen werden und besonders wenn die Systemzustände der Schweißstrom und die elektrische Spannung zwischen den Elektroden sind, können solche vergleichsweise starken Spannungsänderungen oder Stromänderungen auf eine Veränderung des Widerstandes in der Fügestelle hindeuten. Eine entsprechende Widerstandsänderung lässt wiederum Rückschlüsse auf den Schweißvorgang in der Fügestelle zu. An dieser Stelle sei in Erinnerung gerufen, dass in einem Strom-Spannungs-Zustandsdiagramm eine Diagonale durch den Ursprung einen konstanten Widerstand repräsentiert. Entsprechende Abweichungen einer solchen Diagonale bedeuten entsprechende Widerstandsänderungen.
Insbesondere wird insoweit auch als ein Kriterium vorgeschlagen, zu prüfen, bei welchem Wert des Schweißstroms die elektrische Spannung an den Elektroden einen Maximalwert annimmt, wenn der Schweißstrom und die elektrische Spannung die beiden Systemzustände bilden. Hierdurch ist ein guter Rückschluss auf das elektrische Widerstandsverhalten und damit auf den Verlauf des Schweißvorgangs möglich.

Die genannten Kriterien zur Auswertung eines Zustandsverlaufs können kombiniert werden, oder einzeln betrachtet werden. Bspw. kann die Auswertung einer Schleife in Kombination mit der Auswertung eines Maximalwertes erfolgen. Ebenso kann ein Zustandsverlauf ausgewertet werden, der keine Schleife aufweist.

Gemäß einer weiteren Ausführungsform wird vorgeschlagen, dass als wenigstens ein Systemzustand ein elektrischer Widerstand zwischen den zwei Elektroden aufgenommen wird und insbesondere ein Widerstandsverlauf als zeitlicher Verlauf des elektrischen Widerstands ausgewertet wird. Der Widerstand kann aus zeitgleich aufgenommenem Spannungs- und Stromverlauf bestimmt werden. Es wurde erkannt, dass besonders aus dem zeitlichen Verlauf des Widerstandes Informationen zum durchgeführten Schweißverfahren ableitbar sind.

Bevorzugt ist, dass nach einem Abfall des Widerstandsverlaufs ein Wiederanstieg des Widerstandsverlaufs ausgewertet wird und insbesondere ein Maximum des Widerstandsverlaufs nach dem Wiederanstieg ausgewertet wird.

Im Verlauf des Schweißverfahrens wird der elektrische Widerstand anfangs zunächst abfallen. Das ist in jedem Fall zu erwarten. Es wurde aber erkannt, dass anschließend ein mehr oder weniger starker Anstieg auftreten kann, der ein Maximum aufweist und auch Rückschlüsse auf den Schweißprozess zulässt. Dazu wird vorgeschlagen, dieses Verhalten auszuwerten, besonders das Maximum und seine Umgebung auszuwerten wie bspw. Flanken in seiner Umgebung.

Gemäß einer Ausgestaltung wird vorgeschlagen, dass ein Absolutwert des Widerstandsverlaufs ausgewertet wird, insbesondere in Bezug auf einen Minimalwert des Widerstandsverlaufs, der sich nach dem Abfall und vor dem Maximum einstellt. Bereits der Absolutwert des Widerstandsverlaufs kann Aufschluss über das Schweißverfahren geben. Durch den Vergleich mit dem Minimum, wird ein Bezug auf eine gut definierbare Größe vorgeschlagen. Es kann dadurch auch besser eine qualitative Auswertung erreicht werden.

Vorzugsweise wird ein Widerstandsverhältnis eines Maximalwertes des Widerstandsverlaufs nach einem Wideranstieg zu dem Minimalwert des Widerstandsverlaufs vor dem Wiederanstieg gebildet, wobei

- der durchgeführte Schweißvorgang als Widerstandspressschweißen identifiziert wird, wenn das Widerstandsverhältnis einen vorbestimmten ersten Grenzwert unterschreitet und

- der durchgeführte Schweißvorgang als Metalldampfpressschweißen identifiziert wird, wenn das Widerstandsverhältnis einen vorbestimmten zweiten Grenzwert überschreitet, wobei der erste und der zweite Grenzwerte so vorgegeben werden, dass der zweite Grenzwert dem ersten Grenzwert entspricht, oder größer ist.

Hierdurch kann auf einfache Art und Weise eine Auswertung der Größe des Maximums des Widerstandwertes bei dem Wiederanstieg vorgenommen werden. Es wurde erkannt, dass bei einem sehr hohen Maximum davon auszugehen ist, dass Metalldampf entstanden ist und dann entsprechend ein Metalldampfpressschweißen vorgelegen hat. Sowohl der Minimalwert nach dem ersten Abfall aber vor dem Wiederanstieg als auch der darauf folgende Maximalwert sind auch gut durch einen automatisierten Vorgang auffindbar. Die Identifikation des durchgeführten Schweißvorgangs kann somit automatisiert vorgenommen werden.

Der erste Grenzwert und der zweite Grenzwert könnten zusammenfallen und die Identifikation des Schweißprozesses erfolgt dann abhängig davon, ob das Widerstandsverhältnis über oder unter diesem Grenzwert liegt. Durch die Vorgabe zweier unterschiedlicher Grenzwerte kann ein unbestimmter Bereich geschaffen werden, wenn dann nämlich das Widerstandsverhältnis zwischen diesen beiden Grenzwerten liegt, kann es sinnvoll sein, den Schweißprozess mit geänderten Einstellungen zu wiederholen.

Gemäß einer weiteren Ausführungsform wird vorgeschlagen, dass eine Anstiegssteigung einer ansteigenden Flanke vor dem Maximum des Widerstandsverlaufs und/oder eine Abfallsteigung einer abfallenden Flanke nach dem Maximum ausgewertet werden, wenn als Schweißvorgang ein Metalldampfpressschweißen identifiziert wurde.

Es wird somit die Steigung des Widerstandsverlaufs vor dem Maximum und nach dem Maximum aufgenommen, zumindest eine von beiden. Das wird für den Fall vorgeschlagen, dass bereits ein Metalldampfpressschweißen identifiziert wurde. Dadurch kann in Kenntnis des identifizierten Schweißverfahrens ergänzend eine quantitative Auswertung vorgenommen werden. Es wurde bereits erkannt, dass die Ausprägung des Maximums mit dem Metalldampfpressschweißen zusammenhängt. Dazu wird nun vorgeschlagen, dieses Maximum weiter auszuwerten und dazu diese Flankensteigungen zu untersuchen.

Dabei liegt die zusätzliche Erkenntnis zu Grunde, dass dieses Maximum, jedenfalls wenn es stark ausgeprägt ist, durch die Überlagerung zweier Kurvenverläufe gebildet wird. Im Grunde kann das so erklärt werden, was auch erfindungsgemäß erkannt wurde, dass eine ansteigende Widerstandskurve in dem Maximum in eine absteigende Widerstandskurve übergeht. Hier wechselt die dominierende Ausprägung durch die ansteigende Widerstandskurve zur dominierenden Ausprägung durch die abfallende Widerstandskurve. Durch die Steigungsauswertung vor und nach dem Maximum wird somit im Wesentlichen jeweils eine dieser beiden überlagerten Widerstandskurven ausgewertet.

Vorzugsweise wird ein Flankenwinkel zwischen der Anstiegssteigung des Widerstandsverlaufs und der Abfallsteigung des Widerstandsverlaufs bestimmt, der einen Winkel zwischen der ansteigenden Flanke vor dem Maximum und der abfallenden Flanke nach dem Maximum angibt und kleiner als 180° ist, und wobei

- die Größe des Flankenwinkels als Indikator für die Qualität des Metalldampfpressschweißverfahrens verwendet wird, insbesondere, dass

- von einer ausreichenden Schweißqualität ausgegangen wird, wenn der Flankenwinkel kleiner als ein vorgegebener Referenzwinkel und größer als ein ebenfalls vorgegebener Grenzwinkel ist.

Es wird somit ein Winkel der beiden Flanken in oder bei diesem Maximum bestimmt. Der Winkel ist kleiner als 180° und das bedeutet, dass der Winkel unter den beiden Flanken betrachtet wird, was letztlich aber nur eine Frage der Definition ist. Überhaupt ist letztlich generell eine Vergleichbarkeit der Untersuchungen wichtiger als exakte Werte. Durch die Vorgabe eines Referenz- und Grenzwinkels ergibt sich ein flexibles Bewertungskriterium, das auch auf einfache Art und Weise an die jeweilige Schweißaufgabe angepasst werden kann.

Es wurde erkannt, dass je kleiner der Winkel ist, desto intensiver die Metalldampfbildung angenommen werden kann. Daher wird vorgeschlagen, zu prüfen, ob der Winkel kleiner als ein entsprechender Referenzwinkel ist. Es wird aber auch vorgeschlagen, zu prüfen, ob der Winkel größer als ein Grenzwinkel ist, um eine zu große Metalldampfbildung zu erkennen, die die Schweißstelle verbrennen könnte. Die Größe des Grenzwinkels und des Referenzwinkels kann bspw. empirisch durch Vorversuche ermittelt werden. Sollte das Verfahren bereits so eingestellt und/oder erprobt sein, dass nur das Erreichen des Referenzwinkels oder des Grenzwinkels zu erwarten ist, könnte entsprechend die Überwachung nur eines dieser beiden Winkel ausreichen.

Im Übrigen kann der Flankenwinkel auch als Unstetigkeitswinkel bezeichnet werden, weil zumindest die zeitliche Ableitung des Widerstandsverlaufs im Bereich des Maximums nicht stetig ist, wenn ein Metalldampfpressschweißen identifiziert wurde. Die Begriffe Flankenwinkel und Unstetigkeitswinkel werden synonym verwendet.

Erfindungsgemäß wird zudem eine Vorrichtung zum Durchführen und Überwachen eines elektrischen Schweißverfahrens zum Verbinden eines Fügeparametersatzes vorgeschlagen. Diese Vorrichtung umfasst:

- eine elektrische Stromquelle zum Bereitstellen eines elektrischen Schweißstroms insbesondere mit Schweißsteuerung, die den Ablauf des Schweißvorgangs steuert,

- zwei Elektroden zum Führen des Schweißstromes durch einen Fügebereich der wenigstens zwei Fügepartner zum Durchführen eines Schweißvorgangs,

- ein Kraftsystem, das die Elektroden bewegt und auf die Fügepartner presst und somit den notwendigen, vorher eingestellten Elektrodendruck aufbringt und

- eine Erfassungsvorrichtung zum Aufnehmen wenigstens eines Systemzustandes des Schweißvorgangs und

- eine Auswertevorrichtung, dazu vorbereitet, den durchgeführten Schweißvorgang in Abhängigkeit des Verlaufs des wenigstens einen Systemzustandes zu identifizieren.

Somit ist eine elektrische Stromquelle umfasst, die einen elektrischen Schweißstrom bereitstellen kann. Das kann beispielsweise ein Kondensator mit Thyristor im Falle eines Kondensatorentladungsschweißens sein. Ebenso kann es sich um eine Stromquelle handeln, die einen stetigen Stromfluss generiert, wie beispielsweise ein Inverter oder eine Wechselstromquelle mit Thyristorsteller. Das kann somit alle Verfahren einschließen, die direkt aus dem elektrischen Versorgungsnetz gespeist werden, besonders 50-Hz-Schweißungen, die über Thyristor und Trafo realisiert werden, sowie Mittelfrequenzschweißungen, die über Inverter und Trafo realisiert werden.

Zwei Elektroden werden verwendet, um besonders auch die Fügepartner zwischen sich aufzunehmen, besonders auch zwischen sich zu pressen. Über die Elektroden wird dann der Schweißstrom durch den Fügebereich der wenigstens zwei Fügepartner geführt, um dadurch den Schweißvorgang durchzuführen.

Das Kraftsystem, das synonym auch als Bewegungsmittel oder Kraftmittel bezeichnet werden kann, wird so angeordnet und verwendet, dass es zumindest eine der Elektroden bewegt, um diese auf die Fügestücke aufzusetzen und während des Schweißvorgangs den notwendigen, vorher eingestellten Elektrodendruck zu erzeugen. Welche Art von Kraftsystem zur Anwendung kommt, ist für das Verfahren nicht entscheidend, also können beispielsweise pneumatische, hydraulische, servomotorische, magnetische oder anderweitige Kraftsysteme zum Einsatz kommen.

Eine Erfassungsvorrichtung erfasst wenigstens einen Systemzustand des Schweißvorgangs. Dazu können Strom- und Spannungswerte aufgenommen werden, besonders solche, die von der elektrischen Stromquelle bereitgestellt werden. Es können dazu auch Sensoren vorgesehen sein, die entsprechende Systemzustände aufnehmen. Die Erfassungsvorrichtung kann diese Systemzustände zudem vorzugsweise auch speichern und weiterverarbeiten.

Schließlich ist eine Auswertevorrichtung vorgesehen, die dazu vorbereitet ist, den durchgeführten Schweißvorgang in Abhängigkeit des Verlaufs des wenigstens einen Systemzustands zu identifizieren. Die Auswertevorrichtung verwendet besonders die von der Erfassungsvorrichtung aufgenommenen Systemzustände und wertet diese aus.

Vorzugsweise führt die Vorrichtung ein Verfahren gemäß wenigstens einer der vorstehend erläuterten Ausführungsformen durch. Damit kann durch eine solche vorgeschlagene Vorrichtung das umgesetzt werden, was oben beschrieben wurde und im Übrigen auch beispielhaft noch unten beschrieben werden wird.

In manchen Ausführungsformen sind Erfassungs- und Auswertevorrichtung in die Schweißsteuerung integriert. Andererseits sind aber auch andere Ausführungen möglich, die lediglich die Erfassungs- und Auswertevorrichtung enthält und unabhängig von einer Schweißeinrichtung, als externes System, den Schweißvorgang messtechnisch überwacht und das beschriebene Verfahren ausführen.

Erfindungsgemäß wird somit auch eine Überwachungsvorrichtung zum Überwachen eines elektrischen Schweißverfahrens zum Verbinden eines Fügepartnersatzes bestehend aus wenigstens zwei Fügepartnern vorgeschlagen. Diese bezieht sich auf ein Schweißverfahren, bei dem ein Schweißvorgang zum Herstellen einer Schweißverbindung durchgeführt wird, wie er oben gemäß wenigstens einer Ausführungsform beschrieben wurde. Die Überwachungsvorrichtung umfasst ein Aufnahmemittel zum Aufnehmen wenigstens eines Systemzustandes des Schweißvorgangs und eine Auswerteeinrichtung zum Identifizieren des durchgeführten Schweißvorgangs in Abhängigkeit des Verlaufs des wenigstens einen aufgenommenen Systemzustandes.

Die Überwachungsvorrichtung kann somit auch als zu einer Schweißvorrichtung separate Vorrichtung betrieben werden und Überwachungen durchführen. Vorzugsweise ist mit einer Schweißvorrichtung gekoppelt. Das kann den Datenaustausch zum Aufnehmen der Systemzustände betreffen, und/oder eine Verbindung zum Übertragen von Steuerbefehlen oder Steuerparametern an die Schweißvorrichtung. Vorzugsweise werden damit Verfahren wie vorstehen gemäß wenigstens einer Ausführungsform beschrieben durchgeführt. Sofern diese Verfahren auch das Steuern der Schweißvorrichtung betreffen, sind diese durch die Überwachungsvorrichtung zusammen mit der damit gekoppelten Schweißvorrichtung umzusetzen.

Nachfolgend wird die Erfindung anhand von Ausführungsbeispielen unter Bezugnahme auf die begleitenden Figuren näher erläutert.

Figur 1          zeigt schematisch einen Aufbau einer Schweißvorrichtung.

Figur 2          zeigt einen Schliff einer Schweißstelle, der Probleme bei der Auswertung machen kann.

Figuren 3 bis 5   zeigen jeweils eine Strom-Spannungs-Kurve bei unterschiedlichen Schweißabläufen.

Figur 6          zeigt Widerstandsverläufe verschiedener Schweißverfahren.

Figur 7          zeigt Widerstands- und Stromverläufe mit speziellen Widerstandswerten.

Figur 8          zeigt ein Diagramm mit einer Auswertung eines Widerstandsverlaufs.

Figuren 9 und 10  zeigen zu zwei untersuchten Schweißverfahren jeweils einen Widerstandsverlauf mit zugeordneter Steigung.

Figur 11         zeigt ein Diagramm zur Bestimmung relevanter Winkel eines Widerstandsverlaufs.

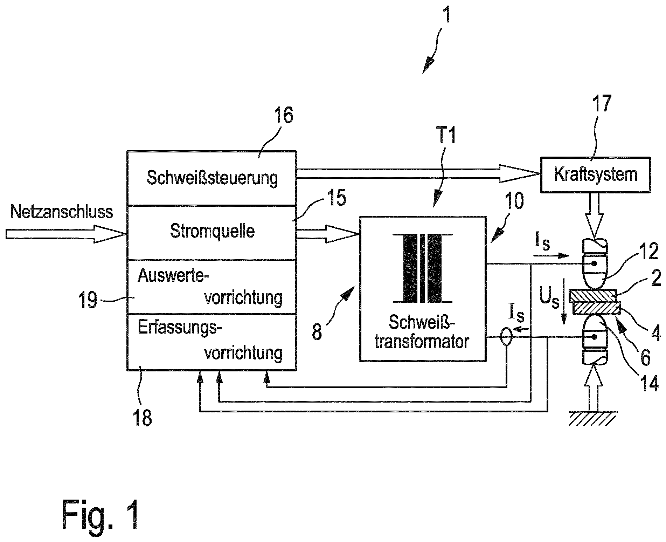

Figur 1 zeigt eine Schweißvorrichtung 1 in einer vereinfachten Darstellung. Dort sollen ein erster und ein zweiter Fügepartner 2 und 4, die zusammen einen Fügepartnersatz 6 bilden, miteinander verschweißt werden. Der Fügepartnersatz 6 bildet somit das Schweißgut und ist zwischen einer ersten und zweiten Elektrode 12 und 14 angeordnet.

Bei einem Schweißvorgang wird ein Schweißstrom $I_S$ über die beiden Elektroden 12, 14 durch das Schweißgut geleitet. Dabei fällt eine Schweißspannung $U_S$ zwischen den beiden Elektroden 12, 14 ab und fällt damit über dem Schweißgut, also dem Fügepartnersatz 6 bzw. den beiden Fügepartner 2 und 4 ab.

Zum Erzeugen des Schweißstroms $I_S$ ist eine Stromquelle 15 vorgesehen, die vom elektrischen Versorgungsnetz gespeist wird und deren Strom durch den Transformator T1 an der Primärseite 8 fließt und in der Sekundärseite 10 den Schweißstrom $I_S$ erzeugt.

Über eine Schweißsteuerung 16 wird die Schweißvorrichtung gesteuert und dadurch wird auch ein Kraftsystem 17 angesteuert, das die erste Elektrode 12 auf die zweite Elektrode 14 bewegt und dadurch, zwischen den beiden Elektroden 12 und 14 einen Pressdruck auf die Fügepartner 12 und 14 ausgeübt. Dieser Pressdruck kann auch als Elektrodendruck bezeichnet werden.

Durch die Erfassungsvorrichtung 18 werden Messwerte aufgenommen, einschließlich des Schweißstromes $I_S$ und der Schweißspannung $U_S$. Sie Daten können in der Auswertevorrichtung 19 ausgewertet werden.

Figur 2 zeigt exemplarisch einen Querschliff im Bereich einer Fügezone 20 zwischen einem ersten und zweiten Fügepartner 22 bzw. 24. Die Darstellung kann als ein typisches Beispiel für den Fall des Metalldampfschweißens angesehen werden. Hierbei werden die Fügepartner 22, 24 eher selten aufgeschmolzen. Der entstehende Metalldampf aktiviert die Oberflächen, und die erreichten Temperaturen versetzen das Material nur in einen plastisch verformbaren Zustand, was eine Linsenbildung verhindert. Der Elektrodendruck presst die Fügepartner 22, 24 an der Berührungsfläche 28 so fest aufeinander, dass die Atome so nahe aneinander rücken, dass atomare Bindungskräfte entstehen können. Dies zeigt die Figur 2 in dem Querschliff und weil keine Linse vorhanden ist und eine deutlich erkennbare Trennlinie 26 zwischen den Fügepartnern 22 und 24 erkennbar ist, die etwa auch die ehemalige Berührungsfläche 28 zeigt, wird bei einem solchen Querschliff bisher häufig von einem Bindefehler, einer sogenannten Klebeschweißung, ausgegangen.

Im vorliegenden Fall ist somit eine Auswertung eines Querschliffs nur dahingehend hilfreich, dass die Länge der Kontaktlinie 26 ausgemessen werden kann, was als ein Qualitätsmerkmal gelten kann.

Es wurde nun erkannt, dass die Metalldampfbildung messtechnisch mit guter Sicherheit im Strom-Spannungs-Zustandsverlauf dargestellt werden kann. Dabei wurde auch erkannt, dass neben dem ohmschen Widerstand in den Elektroden und Werkstücken zusätzliche Spannungsabfälle in der Fügezone zu detektieren sind, besonders wegen auftretendem Metalldampf. Die Spannungsmessung sollte somit über die Fügestelle und nicht wie bisher üblich am Transformatorausgang erfolgen, wie an der Sekundärseite 10 des Transformators T1 gemäß Figur 1. Eine dazu abweichende Messung kann zu völlig anderen Erscheinungsformen der Kurve, also der Kurve des Strom-Spannungs- Zustandsverlaufs, führen.

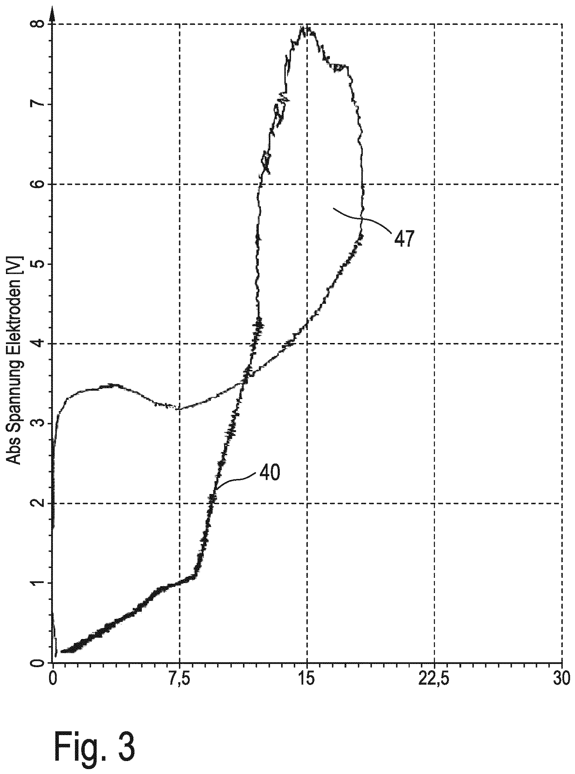

Eine Möglichkeit einer Untersuchung besteht darin, aufgenommene Strom-SpannungsVerläufe auszuwerten. Die Figuren 3 bis 5 zeigen unterschiedliche Strom-SpannungsVerläufe, die in der gewählten Darstellung gut klassifiziert werden können. Es wurde erkannt, dass sich in einer solchen Darstellung Schleifen ausbilden können, wie in den Figuren 3 bis 5 zu erkennen ist, und hier jeweils die Ausbildung der Schleife 47, 57 bzw. 67 kennzeichnend für die Metalldampfbildung sein kann.

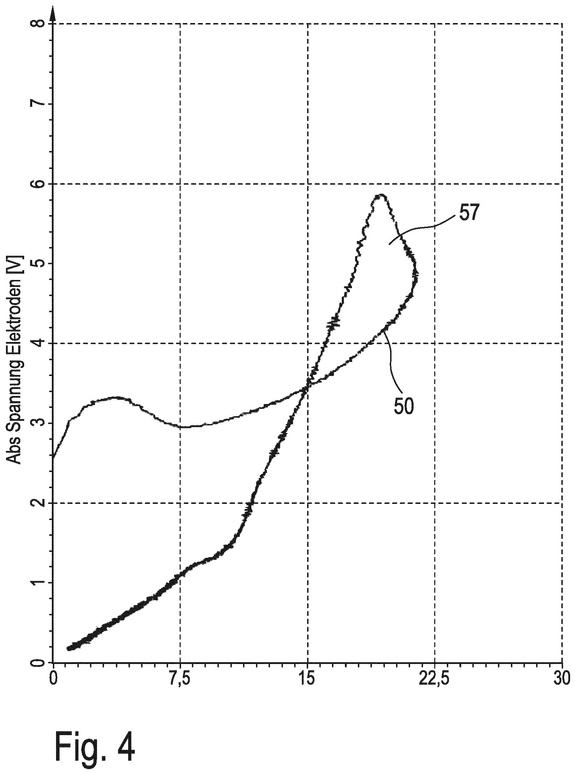

Die Strom-Spannungs-Kurve 50 der Figur 4 weist eine ausreichende Schleife 57 auf, die eine ausreichende Metalldampfbildung darstellt bzw. auf eine ausreichende Metalldampfbildung schließen lässt. Die Kurve 50 der Figur 4 kann somit als qualitätsgerechte i.O.-Schweißung angesehen werden.

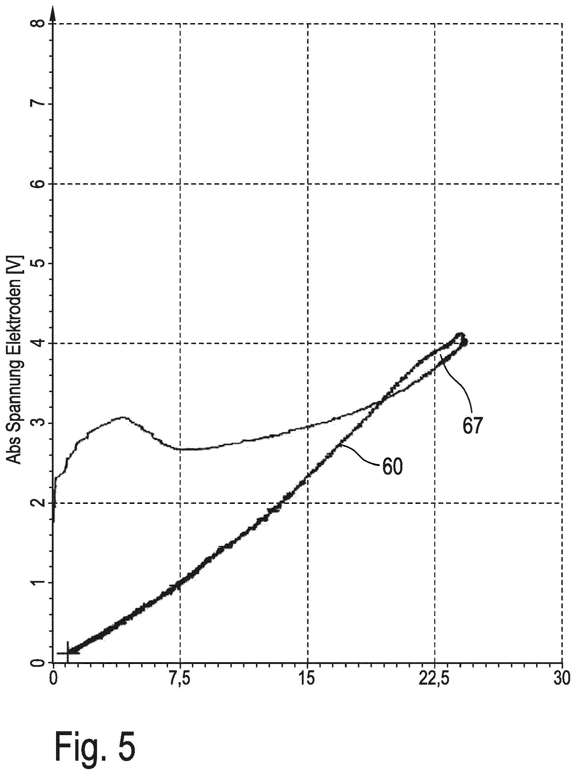

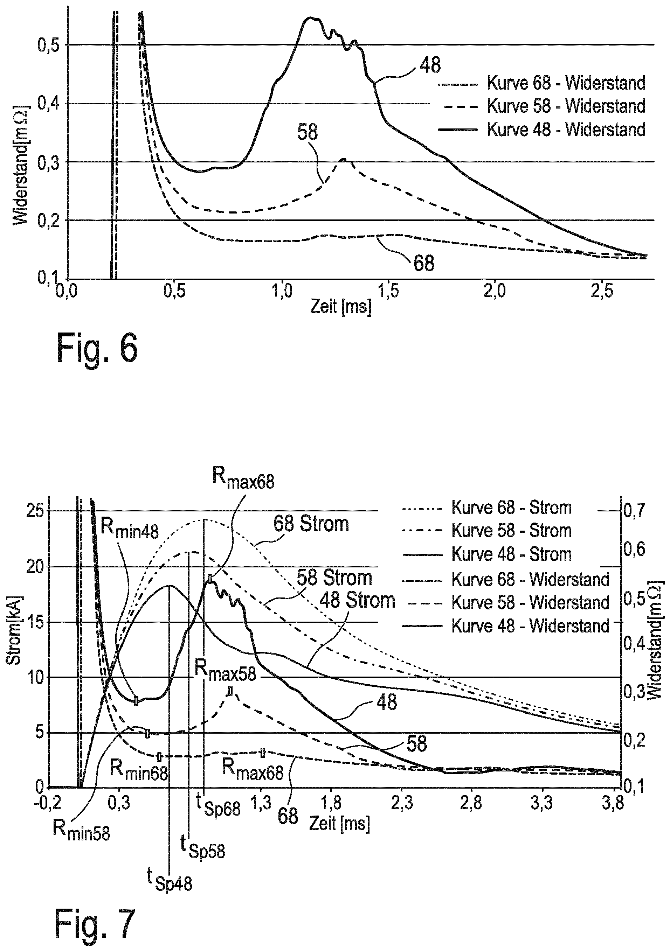

Die Figur 5 zeigt eine Strom-Spannungs-Kurve 60, die eine zu gering ausgebildete Schleife 67 aufweist. Diese zeigt somit eine nicht ausreichende Metalldampfbildung an. Daraus ergibt sich wiederum eine unzureichende Schweißqualität. Eine Nachuntersuchung hat dabei gezeigt, dass bei der Schweißung, die Figur 6 zugrunde gelegen hat, nur der äußere Rand des Fügebereichs verschweiß war, wodurch die verschweißte Fläche zu klein war.

Die Strom-Spannungs-Kurve 40 der Figur 3 weist wiederum eine zu stark ausgeprägte Schleife 47 auf, die auf eine zu stark ausgeprägte Metalldampfbildung hindeutet. Hier wurde eine zu große Energie zugeführt, die zu viel Buckelvolumen verdampfte, so dass Anbindungsfehler entstanden sind. Entsprechend müssen die Figuren 3 und 5 als n.i.O.-Schweißungen, die nicht den Qualitätsanforderungen entsprechen, und die Figur 5 als qualitätsgerechte i.O.-Schweißung angesehen werden.

Aus dieser Kenntnis heraus kann nun, was gemäß einer Ausführungsform der Erfindung vorgeschlagen wird, über Form und Lage der Schleife die Intensität der Metalldampfbildung quantifiziert und somit ein Toleranzbereich festgelegt werden.

Die oben geschilderte Erkenntnis des Kurzzeitschweißens mit hoher Wärmestromdichte, die besonders auch in der obigen Tabelle zusammengefasst ist und insoweit als 4-Stufen-Modell erläutert wurde, zeigt, dass die Verbindung im Falle des Metalldampfpressschweißens über den gasförmigen und plastischen Zustand entsteht und folglich auch keine Schweißlinse entsteht. Mit der Darstellung des Strom-Spannungs-Zustandsverlaufs, kann das gut nachgewiesen werden. Es wurde deshalb auch erkannt, dass bei der Bewertung des Schweißvorgangs keine Prüfverfahren angewendet werden sollten, die von einer Vermessung der Schweißlinse ausgehen. Die Güte der Schweißverbindung sollte stattdessen durch Prüfen der Festigkeit, wie beispielsweise durch Zugversuche, oder durch Verfahren der dynamischen Beanspruchung, ermittelt werden. Ein Schliff, wie er beispielsweise in Figur 2 gezeigt ist, liefert demnach lediglich Aussagen über die Länge bzw. den Querschnitt der Anbindung gegebenenfalls das Fehlen von Imperfektionen. Insoweit könnten diese Kriterien allerdings auch als Anhaltspunkt für die Festigkeit herangezogen werden.

Die Darstellung und Erläuterung besonders zu den Figuren 2 bis 5 baut darauf auf, dass beispielsweise das Kondensatorentladungsschweißen, als eines der Kurzzeitschweißverfahren hoher Wärmestromdichte bewusst nach dem oben vorgestellten Vier-Phasen-Modell bzw. Vier-Stufen-Modell und damit als Metalldampfpressschweißverfahren ausgeführt wurde.

Es wurde aber auch erkannt, dass auch die Möglichkeit besteht, das Kondensatorentladungsschweißen als reines Widerstandsschweißverfahren, beispielsweise als Kondensatorentladungszangenschweißen auszuführen. Bei einem solchen Verfahren entsteht kein Metalldampf, allenfalls im Fehlerfall, und die Verbindung entsteht über die Erstarrung der aufgeschmolzenen Bereiche beider Fügepartner und es bildet sich eine Linse aus.

In beiden Fällen des Kurzzeitschweißens mit hoher Wärmestromdichte, nämlich die Anwendung als Metalldampfpressschweißen oder als Widerstandspressschweißen, kann die Bewertung des Schweißvorgangs mittels Strom-Spannungs-Verlauf durch die bisher übliche Bewertung anderer Parameter, wie Setz- und Absenkweg, ergänzt werden. Dabei wird vorgeschlagen, eine Identifikation, welche Art des Kurzzeitschweißens vorliegt, voranzustellen.

Es wird besonders ein Überwachungsverfahren vorgeschlagen, das es erlaubt, den ausgeführten Schweißvorgang hinsichtlich des tatsächlich abgelaufenen Verfahrens zu beurteilen, um darüber die geeigneten Prüfkriterien auszuwählen. Dieses wird insbesondere deshalb notwendig, weil insbesondere beim Kondensatorentladungsschweißen (KE-Schweißen) bisher grundsätzlich Prüfkriterien des Widerstandsschweißens angelegt wurden, obwohl oftmals andere Bindungsmechanismen wirken. Auf diese Weise wurden Verbindungen als unzureichend klassifiziert, die tatsächlich über die notwendigen Festigkeitswerte verfügen.

Die Erfindung dient auch dazu, die Qualität der ausgeführten Schweißung zu beurteilen.

Das vorgeschlagene und vorgestellte Kurzzeitschweißen mit hoher Wärmestromdichte (KShW) kann besonders am Beispiel des KE-Schweißens erläutert werden, da es den Kern der Erfindung am besten darstellen kann. Es ist aber auf andere Verfahren wie das Buckelschweißen mit stetigem Stromfluss übertragbar.

Die Figuren 3 bis 5 verwenden eine Darstellung $U = f(I)$, die auch als eine zumindest indirekte Darstellung von Widerständen betrachtet werden kann. Gemäß weiteren, nachfolgend beschriebenen Ausführungsformen werden unmittelbar die Zustandswerte bzw. ein entsprechender zeitlicher Verlauf $R = f(t)$ untersucht. Die Kurven der Figuren 3 bis 5 ergeben dann die in Figur 6 gezeigten Verläufe. Dabei entsprechen die Verläufe 48, 58 und 68, in dieser Reihenfolge, den Verläufen der Figuren 3, 4 bzw. 5.

Die Kurve 68 gleicht einem typischen Verlauf von Widerstandsschweißungen: Dem starken Abfall des Widerstands, unter Einwirkung der Elektrodenkräfte und der beginnenden Erwärmung reduzieren sich die Übergangswiderstände Werkstück/Werkstück und Elektrode/Werkstück schnell deutlich, folgt ein leichter Anstieg des Widerstands, verursacht durch die Erwärmung der Fügezone. Letzterer ist in der Kurve 68 nur schwach ausgeprägt. Je nach Fügematerial und Stromverlauf kann die Widerstandsüberhöhung intensiver ausfallen. Entscheidend ist aber, dass die Kurve in der Umgebung des Widerstandsmaximums einen stetigen Verlauf nimmt.

Im Gegensatz dazu weist die Kurve 58 im Bereich des Widerstandmaximums eine nicht stetig differenzierbare Stelle auf, die hier als Knickstelle bezeichnet wird und, da die Kurve hier nicht stetig differenzierbar ist, auch als Unstetigkeitsstelle bezeichnet werden kann, und die nicht durch die Erwärmung der Fügestelle hervorgerufen wird. Der Anstieg des Widerstands erklärt sich stattdessen aus einer Verengung des Stromkanals. Das Ausbilden von Metalldampf und kleinsten Metalltröpfchen trägt Material vom Schweißbuckel ab, der sich dadurch in seinem Durchmesser verringert und so der kleinere Leitungsquerschnitt zu einer deutlichen Widerstandserhöhung beiträgt. Im Extremfall - bei zu starker Metalldampfbildung - reduziert sich der Stromkanal auf null und es kommt zu einer zeitweiligen Stromunterbrechung.

Der Widerstandserhöhung wirkt die Elektrodenbewegung entgegen. Indem der Kraftantrieb die Elektroden aufeinander zu bewegt, wird der Buckel zusammengedrückt und somit die Berührungsfläche des Buckels mit dem anderen Fügepartner verbreitert - es kommt zu einer Vergrößerung des Stromkanals, was wiederum den Widerstand sinken lässt. Die Knickstelle des Kurvenverlaufs und damit das lokale Widerstandsmaximum tritt genau in dem Moment auf, in dem die Wirkung der Elektrodenbewegung, also die Vergrößerung der Berührungsfläche, die Oberhand über die Metalldampfbildung und die damit verbundene Stromkanalverengung gewinnt.

Die vorgeschlagene Überwachung zielt auf folgende Einschätzungen ab:

1. Unterscheidung, welcher Bindungsmechanismus vorliegt, ob also eine Widerstandspressschweißung bzw. ein Widerstandspressschweißen mit Linse oder eine Metalldampfpressschweißung bzw. ein Metalldampfpressschweißverfahren ohne Linse vorliegt.

2. Beurteilung der Qualität der Verbindung über die Intensität der Metalldampfbildung.

Ein erstes qualitatives Kriterium, mit dem Widerstands- und Metalldampfpressschweißen voneinander unterschieden werden können, ist das Auftreten einer Knickstelle und daraus lassen sich folgende Klassifizierungen ableiten:

• Ein stetiger Verlauf der Widerstandskurve deutet auf ein Widerstandspressschweißen

• und eine Unstetigkeitsstelle in der Widerstandskurve deutet auf ein Metalldampfpressschweißen hin.

Um eine quantitative Bewertung der Qualität vornehmen zu können, werden die Widerstandsverläufe folgendermaßen ausgewertet. Dazu wird zunächst auf Figur 7 verwiesen, in der zusätzlich zu den Widerstandsverläufen zugehörige Stromverläufe eingezeichnet sind.

Zuerst wird die Zeitdifferenz zwischen Strom- und Widerstandsmaximum

$$t_{\Delta IRex} = t_{Rmax} - t_{Sp}$$

berechnet. Dieses Ergebnis soll überwacht werden, und innerhalb von Grenzen $t_{\Delta Rlexmin}$ und $t_{\Delta Rlexmax}$ liegen. Es wurde erkannt, dass dieser Wert in einem bestimmten Bereich sein muss, damit die Schweißung als in Ordnung (i.O.) gelten kann.

Im nächsten Schritt wird das Verhältnis

$$V_{Rex} = R_{max} / R_{min}$$

ermittelt, also der Quotient des maximalen Widerstands zum minimalen Widerstand. Dabei wird als maximaler Widerstand, der auch als Maximum des jeweiligen Widerstandsverlaufs bezeichnet werden kann, das Maximum des Widerstandsverlaufs nach einem Abfall und Wiederanstieg betrachtet. Diese maximalen Widerstände sind in Figur 7 als $R_{max48}$, $R_{max58}$ bzw. $R_{max68}$ bezeichnet. Auch dieses Ergebnis soll überwacht werden und innerhalb von Grenzen $V_{Rexmin}$ und $V_{Rexmax}$ liegen.

$V_{Rex}$ wird als ein Kriterium vorgeschlagen, um zwischen den beiden Grundschweißverfahren - Widerstands- oder Pressschweißverfahren zu unterscheiden. Folgende Prüfkriterien werden vorgeschlagen:

$V_{Rex} < V_{KShW}$ bedeutet, dass ein Widerstandspressschweißen vorliegt.

$V_{Rex} > V_{KShW}$ bedeutet, dass ein Metalldampfpressschweißen vorliegt.

Es wird vorgeschlagen, dass $V_{KShW}$ vorgebbar ist, um das Schweißsystem an die jeweilige Situation anzupassen. Von dem Ergebnis der Überprüfung kann auch ein sich anschließendes Vorgehen abhängen:
Bei $V_{Rex} < V_{KShW}$ ist die Auswertung beendet, es wird von einem Widerstandspressschweißverfahren ausgegangen und etwaige weitere Untersuchungen der Qualität können auf bekannte Art und Weise durchgeführt werden.

Bei $V_{Rex} > V_{KShW}$ wird das Rechenverfahren fortgesetzt, um die Widerstandserhöhung und die damit verbundene Knickstelle quantitativ auszuwerten und so Rückschlüsse auf die Metalldampfbildung ziehen zu können, um also zusätzlich die Qualität der Schweißverbindung prüfen zu können.

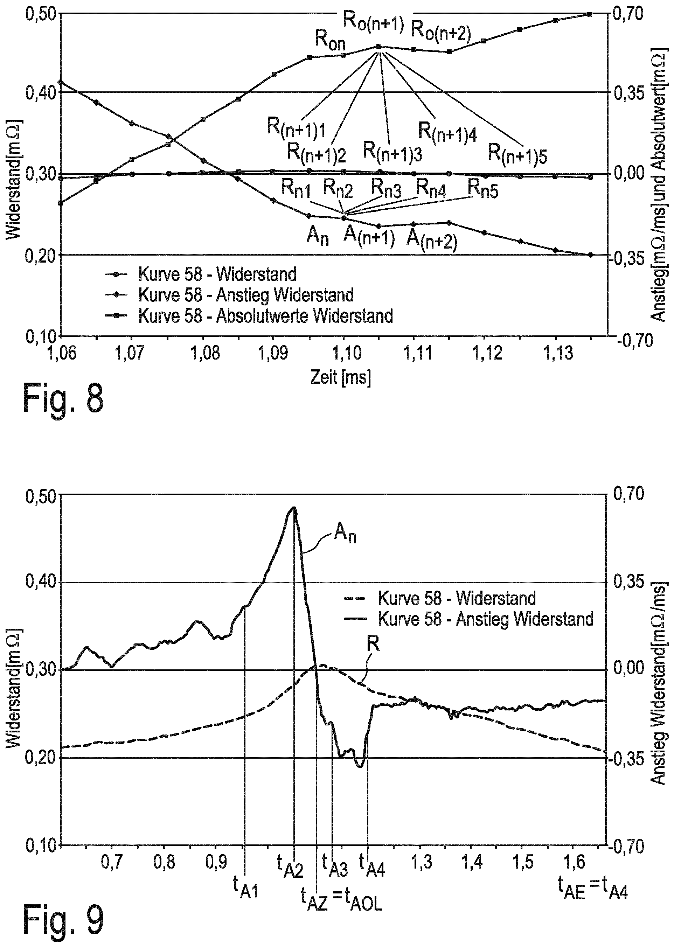

Die Beschreibung erfolgt nachfolgend zunächst anhand des Widerstandsverlaufs der Kurve 58 der Figuren 6 und 7. Für das Verfahren wird zusätzlich auf linearisierte Widerstandsanstiege zurückgegriffen und zur Erläuterung wird auf die Figur 8 verwiesen.

Um die Kurve der Anstiege zu erhalten, werden jeweils 5 Widerstandswerte, die in kleinen Zeitabständen (von beispielsweise 5 $\mu$s) gemessen wurden, rollierend in eine lineare Funktion $y = mx + n$ bzw. $y=A_n x+R_{0n}$ umgerechnet. Es werden also jeweils zum Bestimmen einer solchen linearen Funktion, also zum Bestimmen von der Parameter $A_n$ und $R_{On}$ der linearen Funktion, 5 aufeinander folgende Widerstandswerte verwendet. Für die nächste lineare Funktion werden dann wieder 5 aufeinander folgende Widerstandswerte verwendet. Werden für die erste lineare Funktion also für $A_1$ und $R_{O1}$, der erste bis fünfte Widerstandswert genommen, werden für die zweite lineare Funktion, also für $A_2$ und $R_{O2}$, der zweite bis sechste Widerstandswert genommen.

Das kann auch wie folgt mathematisch ausgedrückt werden. Mit $R_{(n)1}$, $R_{(n)2} \ldots R_{(n)5}$ zu den Zeitpunkten $t_{(n)1}$, $t_{(n)2} \ldots t_{(n)5}$ und $\overline{R_{(n)}} = \frac{1}{5} \sum R_{(n)x}$ sowie $\overline{t_{(n)}} = \frac{1}{5} \sum t_{(n)x}$ ergibt sich:

$$m = A_n = \frac{\sum(t_{nx} - \overline{t_n})(R_{nx} - \overline{R_n})}{\sum(t_{nx} - \overline{t_n})^2}$$

und

$$n = R_{0n} = \overline{R_n} - A_n \overline{t_n}$$

mit $A_n$ als Anstieg und $R_{0n}$ als Absolutwert der n-ten Folge. Die Anstiege werden dann als Kurve $A_n = f(t)$ zusammen mit der Widerstandskennlinie in ein Diagramm gezeichnet.

Figur 8 zeigt diese Verläufe. Demnach bildet die mittlere Kurve die gemessenen Widerstandswerte und das ist ein Ausschnitt der Kurve 58 der Figuren 6 und 7. Jedem Messzeitpunkt ist zudem eine lineare Funktion y=$A_n$x+$R_{0n}$ zugeordnet und dazu sind die Parameter $A_n$ und $R_{on}$ jeweils ebenfalls als Kurve eingezeichnet.

Der Parameter $A_n$ kann als Anstieg oder Steigung bezeichnet werden. Die Kurve der Anstiege $A_n$ steigt hier an. Der Parameter $R_{on}$ kann als Absolutwert oder Verschiebung bezeichnet werden. Die Kurve der Absolutwerte $R_{on}$ fällt hier ab.

Danach wird der Auswertebereich festgelegt. Dieser beginnt bei dem Wert des minimalen Widerstands und endet an der doppelten Stromanstiegszeit, verlängert um die Zeit $\Delta t_{A0}$:

$t_{AA} = t_{Rmin}$ und $t_{AE} = 2t_{Sp} + \Delta t_{A0}$.

Mit

$t_{AZ}$: als Maximum im Widerstandsverlauf bzw. der (erste) Nulldurchgang des Verlaufs der Widerstandsanstiege und

$t_{A0L}$: der letzten Nullstelle des Verlaufs der Widerstandsanstiege

erhalten wir

$$\Delta t_{A0} = t_{A0L} - t_{AZ}.$$

In Fällen, wie in der Kurve 58 der Figuren 6 und 7, in denen es nur eine Nullstelle gibt, ist $t_{AZ} = t_{A0L}$ und somit $\Delta t_{A0} = 0$.

Das ist in der Figur 9 erläutert, die im Vergleich zu Figur 8 einen deutlich größeren Ausschnitt der Widerstandskurve der Figuren 6 und 7 zeigt. Außerdem ist der Anstieg $A_n$ für einen entsprechend längeren Zeitraum eingezeichnet.

Auf der Basis des Verlaufs der Anstiege werden im Auswertebereich zusätzliche Zeitmarken $t_{A1}$, $t_{A2}$, $t_{A3}$ und $t_{A4}$ festgelegt. Die richtige Ermittlung der Zeitmarken ist ein entscheidender Punkt für die weitere Auswertung. Dabei ist aber auch hier wichtig, eine Vergleichbarkeit zu schaffen. Auf absolute Werte kommt es als Ergebnis weniger an.

Die Zeitmarken sind folgendermaßen definiert:

$t_{A1}$: Der Anstieg $A_n = f(t)$ übersteigt das Fünffache der Mittelwerte der ersten 20 Anstiege nach dem Beginn des Auswertebereichs $t_{AA}$: $A_n > 5(\overline{A_1 ...A_{20}})$.

$t_{A2}$: Das letzte Maximum der Kurve der Widerstandsanstiege vor dem Zeitpunkt $t_{AZ}$.

$t_{A3}$: Das Ende des ersten Anstiegs der Kurve der Widerstandsanstiege nach dem Zeitpunkt $t_{A0L}$.

$t_{A4}$: Der negative Anstieg $A_n = f(t)$ steigt über das Doppelte der Mittelwerte der letzten 20 Anstiege vor dem Ende des Auswertebereichs $t_{AE}$: $A_n > 2(\overline{A_{z-19} ...A_z})$.

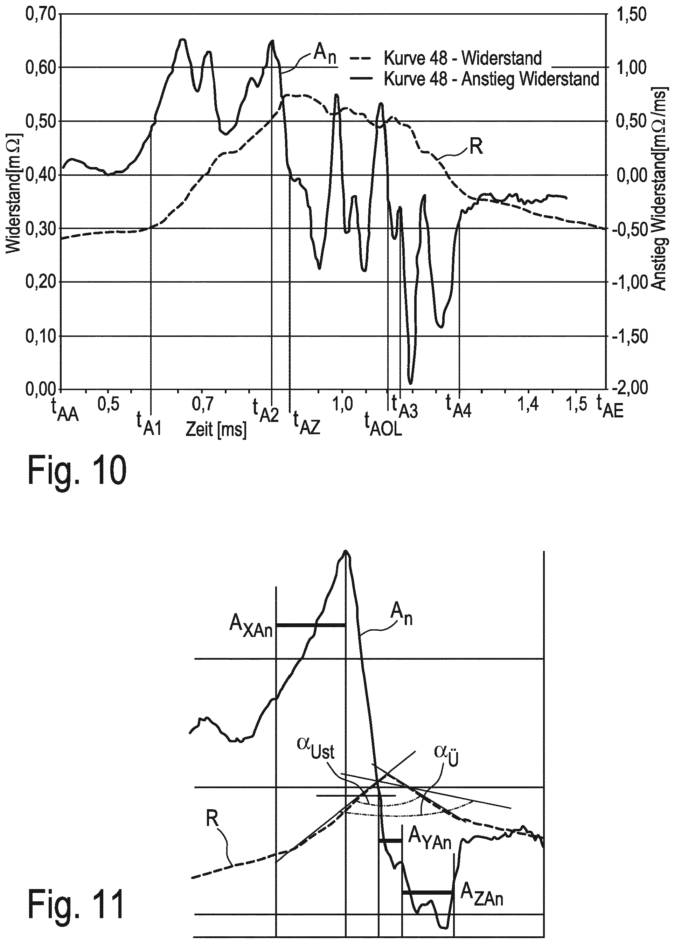

Da sich die Kurven 48 und 58 hinsichtlich ihrer Charakteristik deutlich unterscheiden, sind in Figur 10 die Zeitmarken für die Kurve 48 gesondert dargestellt.

In Abhängigkeit der Zeitmarken werden jetzt Mittelwerte der Anstiege $A_n$ berechnet:

$$A_{XAn} = \frac{1}{z}\sum_{z=t_{A1}}^{t_{A2}} A_n$$

$$A_{YAn} = \frac{1}{z}\sum_{z=t_{AZ}}^{t_{A3}} A_n$$

$$A_{ZAn} = \frac{1}{z}\sum_{z=t_{A3}}^{t_{A4}} A_n$$

Um Abweichungen der mittleren Anstiege noch feiner feststellen zu können, werden zusätzlich die Standardabweichung der Einzelanstiege, die den Mittelwert bilden, berechnet:

$$\sigma_{XAn} = \sqrt{\frac{\sum(A_n - A_{XAn})^2}{n}}$$

$$\sigma_{YAn} = \sqrt{\frac{\sum(A_n - A_{YAn})^2}{n}}$$

$$\sigma_{ZAn} = \sqrt{\frac{\sum(A_n - A_{ZAn})^2}{n}}$$

Die zusammengehörenden mittleren Anstiege und Standardabweichungen werden vorzugsweise in eine Prozesssteuereinheit registriert und in dieser automatisch überwacht. Möglich ist auch eine Anzeige, um dem Benutzer die Möglichkeit einer händischen Auswertung oder Einschätzung der Qualität des Schweißverfahrens zu geben.

Da die mittleren Anstiege $A_{YAn}$ und $A_{ZAn}$ grundsätzlich negativ ausfallen, wird vorgeschlagen, das bei der Berechnung bzw. Bereitstellung in einer Anzeige zu berücksichtigen:

Es wurde erkannt, dass sich ein direktes Maß für die Intensität der Metalldampfbildung primär aus dem Winkel ergibt, den der ansteigende Ast und der abfallende Ast der Widerstandskurve bilden. Besonders wurde erkannt, dass die Metalldampfbildung umso intensiver ist, je spitzer dieser Winkel ist, der hier als Flankenwinkel oder Unstetigkeitswinkel bezeichnet wird. Dieser Flankenwinkel bzw. Unstetigkeitswinkel $\alpha_{Ust}$ ist in Figur 11 dargestellt.

Dieser Flankenwinkel bzw. Unstetigkeitswinkel $\alpha_{Ust}$ berechnet sich dann mit:

$$\alpha_{Ust} = 180° - \arctan(A_{XAn}) + \arctan(A_{ZAn}).$$

Es werden somit die jeweiligen Anstiege bzw. Steigungen zwischen den Zeitpunkt $t_{A1}$ und $t_{A2}$ sowie zwischen $t_{A3}$ und $t_{A4}$ zu Grunde gelegt, denn das sind die Zeitabschnitte, denen die Werte $A_{XAn}$ bzw. $A_{ZAn}$ zugeordnet sind. Da die Kurven unterschiedlichste Formen annehmen können, wird vorgeschlagen, das Ergebnis für den Unstetigkeitswinkel $\alpha_{Ust}$ über Plausibilitätsprüfungen abzusichern. Dazu wird ein zweiter Winkel, der Übergangswinkel $\alpha_{\ddot{U}}$ definiert:

$$\alpha_{\ddot{U}} = 180° - \arctan(A_{XAn}) + \arctan(A_{YAn}).$$

Der Wert $A_{YAn}$ gehört zum Zeitabschnitt $t_{AZ}$ bis $t_{A3}$. Bei Kurven, wie der Kurve 58 ist die Differenz zwischen $t_{A3}$ $t_{A3}$ und $t_{AZ}$ $t_{AZ}$ relativ kurz, sodass hinsichtlich von $\alpha_{\ddot{U}}$ eine gewisse Unsicherheit ergibt. Deshalb sollten zusätzlich die Koordinaten $t_\alpha$ und $R_\alpha$ des Scheitelpunktes des Unstetigkeitswinkels berechnet (und überwacht) werden. Dazu werden noch die Absolutwerte der beiden infrage kommenden Anstiegsgeraden benötigt:

$$R_{0XAn} = \frac{1}{z}\sum_{z=t_{A1}}^{t_{A2}} R_{0n}$$

$$R_{0ZAn} = \frac{1}{z}\sum_{z=t_{A3}}^{t_{A4}} R_{0n}.$$

Die Zeit ergibt sich dann aus

$$t_\alpha = \frac{R_{0ZAn} - R_{0XAn}}{A_{XAn} - A_{ZAn}}$$

und der Widerstand aus einer der beiden Anstiegsgeraden

$$R_\alpha = A_{XAn}t_\alpha + R_{0XAn}$$

oder

$$R_\alpha = A_{ZAn}t_\alpha + R_{0ZAn}.$$

Die Berücksichtigung des zweiten und dritten Zeitpunktes $t_{A2}$ und $t_{A3}$ kann zur Vereinfachung auch weggelassen werden. Bei einer solchen Vereinfachung würde dann auch auf die Plausibilitätsüberprüfung mit Hilfe des Übergangswinkels $\alpha_{\ddot{U}}$,

der den Anstieg zwischen den Zeitpunkten $t_{AZ}$ und $t_{A3}$ berücksichtigt, verzichtet. Gleichzeitig ändern sich die Anstiege $A_{XAn}$, weil die obere Berechnungsgrenze $t_{A2}$ durch $t_{AZ}$ ersetzt wird, und $A_{ZAn}$, weil deren untere Berechnungsgrenze von $t_{A3}$ auf $t_{AZ}$ geändert wird.

**Patentansprüche**

1. Verfahren zum Durchführen und Überwachen eines elektrischen Schweißverfahrens zum Verbinden eines Fügepartnersatzes (6) bestehend aus wenigstens zwei Fügepartnern (2,4), umfassend die Schritte:

 - Durchführen eines Schweißvorgangs zum Herstellen einer Schweißverbindung, wobei ein elektrischer Schweißstrom (ls) mittels zweier Elektroden (12, 14) durch einen zwischen den Elektroden (12, 14) angeordneten Fügebereich der wenigstens zwei Fügepartner (2, 4) des Fügepartnersatzes (6) fließt, wobei zwischen den beiden Elektroden ein Pressdruck auf die Fügepartner ausgeübt wird,
 - Aufnehmen wenigstens eines Systemzustandes des Schweißvorgangs und
 - Identifizieren des durchgeführten Schweißvorgangs in Abhängigkeit des Verlaufs des wenigstens einen Systemzustandes, **dadurch gekennzeichnet, dass** das Identifizieren des Schweißvorgangs beinhaltet, die Art des durchgeführten Schweißvorgangs zu identifizieren, nämlich, ob eine Schweißverbindung im Wesentlichen

     - durch ein Widerstandspressschweißen erfolgt ist, oder
     - durch ein Metalldampfpressschweißen erfolgt ist, bei dem keine Schweißlinse entsteht.

2. Verfahren nach Anspruch 1, **dadurch gekennzeichnet, dass** das Identifizieren des Schweißvorgangs beinhaltet, zu ermitteln,

 - ob sich eine Schweißlinse gebildet hat und daher ein Aufschmelzen im Fügebereich der Fügepartner (2, 4) erfolgt ist, oder
 - ob sich keine Schweißlinse gebildet hat und daher eine Verbindung der Fügepartner (2, 4) im Fügebereich über Annäherung auf Atomabstand erfolgt ist und insbesondere unter Bildung von Metalldampf erfolgt ist, bei dem die Fügepartner (2, 4) im Fügebereich zunächst aktiviert wurden und sich unter Wirkung der Anpresskraft soweit angenähert haben, und sich über atomare Bindungskräfte miteinander verbunden haben.

3. Verfahren nach einem der vorstehenden Ansprüche, **dadurch gekennzeichnet, dass** in Abhängigkeit davon, welcher Schweißvorgang identifiziert wurde, ein Prüfverfahren zum Prüfen der Qualität der Schweißverbindung ausgewählt wird, und/oder dass zum Identifizieren des durchgeführten Schweißvorgangs wenigstens zwei der aufgenommenen Systemzustände als ein Verlauf in einem Zustandsverlauf dargestellt werden.

4. Verfahren nach einem der vorstehenden Ansprüche, **dadurch gekennzeichnet, dass**

     - zum Identifizieren des durchgeführten Schweißvorgangs als Systemzustände
     - der Schweißstrom (ls) und
     - die elektrische Spannung an dem Fügebereich zwischen den Elektroden (12, 14) in einem gemeinsamen Strom-Spannungs-Zustandsverlauf dargestellt werden und
     - abhängig von diesem Zustandsverlauf der Schweißvorgang identifiziert und bewertet wird.

5. Verfahren nach einem der vorstehenden Ansprüche, **dadurch gekennzeichnet, dass** nach einem Schweißvorgang ein weiterer Schweißvorgang für einen weiteren Fügepartnersatz (6) durchgeführt wird, wobei die Fügepartnersätze im Wesentlichen gleich sind und wenigstens ein Schweißparameter in Abhängigkeit des identifizierten ersten Schweißvorgangs eingestellt wird, um den weiteren Schweißvorgang gegenüber dem zuvor durchgeführten Schweißvorgang zu verbessern und/oder dass wenigstens ein Schweißparameter in Abhängigkeit davon eingestellt wird, ob ein Widerstandspressschweißen oder ein Metalldampfpressschweißen erfolgt ist.

6. Verfahren nach einem der vorstehenden Ansprüche, **dadurch gekennzeichnet, dass** zwei Systemzustände als ein Zustandsverlauf dargestellt werden, und dass ausgewertet wird,

     - ob der Zustandsverlauf eine Schleife (37) bildet,
     - bei welchen Zustandswerten sich der Zustandsverlauf selbst schneidet, wenn er eine Schleife (37) bildet,
     - wie groß der Flächeninhalt einer Schleife (37) des Zustandsverlaufs ist, insbesondere im Verhältnis zum Flächeninhalt einer Fläche, die zwischen dem Zustandsverlauf und wenigstens einer Achse des Koordinatensystems eingeschlossen ist,

- zu welchen Werten des einen Systemzustands der beiden Systemzustände der andere Systemzustand einen maximalen Wert aufweist,
- bei welchen Systemzustandswerten sich der eine Systemzustand im Vergleich zum anderen Systemzustand am stärksten ändert und/oder
- bei welchem Wert des Schweißstroms ($I_s$) die elektrische Spannung ($U_s$) an den Elektroden einen maximalen Wert annimmt, wenn der Schweißstrom ($I_s$) und die elektrische Spannung ($U_s$) die beiden Systemzustände bilden.

7. Verfahren nach einem der vorstehenden Ansprüche, **dadurch gekennzeichnet, dass** als wenigstens ein Systemzustand ein elektrischer Widerstand zwischen den zwei Elektroden aufgenommen wird und insbesondere ein Widerstandsverlauf als zeitlicher Verlauf des elektrischen Widerstands ausgewertet wird und/oder dass nach einem Abfall eines bzw. des Widerstandsverlaufs ein Wiederanstieg des Widerstandsverlaufs ausgewertet wird und insbesondere ein Maximum des Widerstandsverlaufs nach dem Wiederanstieg ausgewertet wird und/oder dass ein Absolutwert eines bzw. des Maximums eines bzw. des Widerstandsverlaufs ausgewertet wird, insbesondere in Bezug auf einen Minimalwert des Widerstandsverlaufs nach einem bzw. dem Abfall und vor dem Maximum.

8. Verfahren nach einem der vorstehenden Ansprüche, **dadurch gekennzeichnet, dass** ein Widerstandsverhältnis eines Maximalwertes des Widerstandsverlaufs nach einem Wideranstieg zu einem Minimalwert des Widerstandsverlaufs vor dem Wiederanstieg gebildet wird und dass

- der durchgeführte Schweißvorgang als Widerstandspressschweißen identifiziert wird, wenn das Widerstandsverhältnis einen vorbestimmten ersten Grenzwert unterschreitet und
- der durchgeführte Schweißvorgang als Metalldampfpressschweißen identifiziert wird, wenn das Widerstandsverhältnis einen vorbestimmten zweiten Grenzwert überschreitet, wobei der erste und der zweite Grenzwerte so vorgegeben werden, dass der zweite Grenzwert dem ersten Grenzwert entspricht, oder größer ist und/oder dass eine Anstiegssteigung einer ansteigenden Flanke vor dem Maximum des Widerstandsverlaufs und/oder eine Abfallsteigung einer abfallenden Flanke nach dem Maximum ausgewertet wird, wenn als Schweißvorgang ein Metalldampfpressschweißen identifiziert wurde.

9. Verfahren nach einem der vorstehenden Ansprüche, **dadurch gekennzeichnet, dass**

- zwischen einer bzw. der Anstiegssteigung des Widerstandsverlaufs und einer bzw. der Abfallsteigung des Widerstandsverlaufs ein Flankenwinkel bestimmt wird, der einen Winkel zwischen der ansteigenden Flanke vor dem Maximum und der abfallenden Flanke nach dem Maximum angibt und kleiner als 180° ist, und dass
- die Größe des Flankenwinkels als Indikator für die Qualität des Metalldampfpressschweißverfahrens verwendet wird, insbesondere, dass
- von einer ausreichenden Schweißqualität ausgegangen wird, wenn der Flankenwinkel kleiner als ein vorgegebener Referenzwinkel und größer als ein vorgegebener Grenzwinkel ist.

10. Überwachungsvorrichtung zum Überwachen eines elektrischen Schweißverfahrens zum Verbinden eines Fügepartnersatzes (6) bestehend aus wenigstens zwei Fügepartnern, wobei

- bei dem Schweißverfahren ein Schweißvorgang zum Herstellen einer Schweißverbindung durchgeführt wird, bei dem ein elektrischer Schweißstrom ($I_s$) mittels zweier Elektroden (12, 14) durch einen zwischen den Elektroden (12, 14) angeordneten Fügebereich der wenigstens zwei Fügepartner (2, 4) des Fügepartnersatzes (6) fließt, und die Vorrichtung umfasst
- ein Aufnahmemittel zum Aufnehmen wenigstens eines Systemzustandes des Schweißvorgangs und
- eine Auswerteeinrichtung zum Identifizieren des durchgeführten Schweißvorgangs in Abhängigkeit des Verlaufs des wenigstens einen aufgenommenen Systemzustandes, **dadurch gekennzeichnet, dass** das Identifizieren des Schweißvorgangs beinhaltet, die Art des durchgeführten Schweißvorgangs zu identifizieren, nämlich, ob eine Schweißverbindung im Wesentlichen

- durch ein Widerstandspressschweißen erfolgt ist, oder

- durch ein Metalldampfpressschweißen erfolgt ist, bei dem keine Schweißlinse entsteht.

**11.** Vorrichtung zum Durchführen und Überwachen eines elektrischen Schweißverfahrens zum Verbinden eines Fügepartnersatzes (6) bestehend aus wenigstens zwei Fügepartnern, umfassend:

- eine elektrische Stromquelle zum Bereitstellen eines elektrischen Schweißstroms ($I_s$) insbesondere mit Schweißsteuerung zum Steuern des Ablaufs des Schweißvorgangs,
- zwei Elektroden (12, 14) zum Führen des Schweißstromes ($I_s$) durch einen Fügebereich der wenigstens zwei Fügepartner (2, 4) zum Durchführen eines Schweißvorgangs
- ein Kraftsystem, zum Bewegen der Elektroden zum Pressen auf die Fügepartner um den notwendigen, vorher eingestellten Elektrodendruck aufzubringen und
eine Überwachungsvorrichtung nach Anspruch 10.

**Claims**

**1.** Method for carrying out and monitoring an electrical welding method for connecting a joining partner set (6) comprising at least two joining partners (2, 4), comprising the steps of:

- carrying out a welding method in order to produce a weld connection, wherein an electrical welding current ($I_s$) flows through a joining region of the at least two joining partners (2, 4) of the joining partner set (6), which region is arranged between the electrodes (12, 14), wherein between the two electrodes a pressing pressure is applied to the joining partners,
- recording at least one system state of the welding operation, and
- identifying the welding operation carried out in accordance with the progression of the at least one system state, **characterised in that**
the identification of the welding operation involves identifying the type of welding operation carried out, that is to say, whether a weld connection
- has been substantially carried out by means of a resistance pressure welding operation, or
- has been substantially carried out by means of a metal vapour pressure welding operation in which no welding spot is produced.

**2.** Method according to claim 1, **characterised in that** the identification of the welding operation involves establishing:

- whether a welding spot has formed and therefore a melting has been carried out in the joining region of the joining partners (2, 4), or
- whether no welding spot has formed and therefore a connection of the joining partners (2, 4) in the joining region has been carried out by approaching to atomic distance and in particular with metal vapour being formed, wherein the joining partners (2, 4) were first activated in the joining region and have been moved together under the action of the pressing force to such an extent and have been connected to each other by means of atomic bonding forces.

**3.** Method according to either of the preceding claims, **characterised in that**, depending on which welding operation has been identified, a test method for testing the quality of the weld connection is selected, and/or **in that**, in order to identify the welding operation which has been carried out, at least two of the recorded system states are illustrated as a progression in a state progression.

**4.** Method according to any one of the preceding claims, **characterised in that**,

- in order to identify the welding operation carried out as system states,
- the welding current ($I_s$) and
- the electrical voltage at the joining region between the electrodes (12, 14) are illustrated in a common current/voltage state progression, and
- depending on this state progression, the welding operation is identified and evaluated.

**5.** Method according to any one of the preceding claims, **characterised in that**, after a welding operation, another welding operation is carried out for an additional joining partner set (6), wherein the joining partner sets are substantially identical and at least one welding parameter is adjusted in accordance with the identified first welding operation in order to improve the additional welding operation with respect to the welding operation which has been carried out previously and/or **in that** at least one welding parameter is adjusted depending on whether a resistance pressure welding or a metal vapour pressing welding operation has been carried out.

6. Method according to any one of the preceding claims, **characterised in that** two system states are illustrated as a state progression, and **in that** it is evaluated

   - whether the state progression forms a loop (37),
   - at which state values the state progression intersects with itself when it forms a loop (37),
   - how large the area of a loop (37) of the state progression is, in particular in relation to the area of a surface which is enclosed between the state progression and at least one axis of the coordinate system,
   - at which values of one system state of the two system states the other system state has a maximum value,
   - at which system state values one system state changes to the greatest extent in comparison with the other system state, and/or
   - at which value of the welding current ($I_s$) the electrical voltage ($U_s$) in the electrodes assumes a maximum value when the welding current ($I_s$) and the electrical voltage ($U_s$) form the two system states.

7. Method according to any one of the preceding claims, **characterised in that** an electrical resistance is recorded as at least one system state between the two electrodes, and in particular a resistance progression is evaluated as a time progression of the electrical resistance, and/or **in that**, after a drop of a or the resistance progression, a renewed increase of the resistance progression is evaluated and in particular a maximum of the resistance progression after the renewed increase is evaluated and/or **in that** an absolute value of a or the maximum of a or the resistance progression is evaluated, in particular with respect to a minimum value of the resistance progression after a or the drop and before the maximum.

8. Method according to any one of the preceding claims, **characterised in that** a resistance ratio of a maximum value of the resistance progression is formed after a renewed increase to a minimum value of the resistance progression prior to the renewed increase and **in that**

   - the welding operation which is carried out is identified as a resistance pressure welding operation when the resistance ratio falls below a predetermined first limit value, and
   - the welding operation which is carried out is identified as a metal vapour pressure welding operation when the resistance ratio exceeds a predetermined second limit value, wherein the first and the second limit values are predetermined in such a manner that the second limit value corresponds to or is greater than the first limit value, and/or **in that** a rising gradient of a rising flank prior to the maximum of the resistance progression and/or a declining gradient of a declining flank after the maximum is evaluated when a metal vapour pressure welding operation has been identified as the welding operation.

9. Method according to any one of the preceding claims, **characterised in that**

   - there is determined between a or the rising gradient of the resistance progression and a or the declining gradient of the resistance progression a flank angle which indicates an angle between the rising flank prior to the maximum and the declining flank after the maximum and is less than 180°, and **in that**
   - the size of the flank angle is used as an indicator for the quality of the metal vapour pressure welding method, in particular **in that**
   - an adequate welding quality is assumed when the flank angle is less than a predetermined reference angle and greater than a predetermined limit angle.

10. Monitoring device for monitoring an electrical welding method for connecting a joining partner set (6) comprising at least two joining partners, wherein,

   - during the welding method a welding operation is carried out for producing a weld connection, wherein an electrical welding current ($I_s$) flows by means of two electrodes (12, 14) through a joining region of the at least two joining partners (2, 4) of the joining partner set (6), which region is arranged between the electrodes (12, 14), and the device comprises
   - a recording means for recording at least one system state of the welding operation, and
   - an evaluation device for identifying the welding operation which has been carried out in accordance with the progression of the at least one recorded system state,
   **characterised in that**
   the identification of the welding operation involves identifying the type of welding operation carried out, that is to say, whether a weld connection
- has been substantially carried out by means of a resistance pressure welding operation, or
- has been substantially carried out by means of a metal vapour pressure welding operation, in which no welding spot is produced.

11. Device for carrying out and monitoring an electrical welding method for connecting a joining partner set (6) comprising at least two joining partners, comprising:

- an electrical power source for providing an electrical welding current ($I_s$) in particular with weld control for controlling the sequence of the welding operation,
- two electrodes (12, 14) for guiding the welding current ($I_s$) through a joint region of the at least two joining partners (2, 4) for carrying out a welding operation,
- a force system for moving the electrodes for pressing on the joining partners in order to apply the required, previously adjusted electrode pressure and
- a monitoring device according to claim 10.

**Revendications**

1. Procédé de réalisation et de contrôle d'un procédé de soudage électrique pour relier un ensemble d'éléments à assembler (6) constitué d'au moins deux éléments à assembler (2, 4), comprenant les étapes :

- de réalisation d'un processus de soudage pour fabriquer une liaison par soudure, dans lequel un courant de soudage ($I_s$) électrique circule au moyen de deux électrodes (12, 14) à travers une zone d'assemblage, disposée entre les électrodes (12, 14), des au moins deux éléments à assembler (2, 4) de l'ensemble d'éléments à assembler (6), dans lequel une pression est exercée sur les éléments à assembler entre les deux électrodes,
- d'enregistrement d'au moins un état du système du processus de soudage et
- d'identification du processus de soudage réalisé en fonction de l'évolution de l'au moins un état du système, **caractérisé en ce que**
l'identification du processus de soudage comporte le fait d'identifier le type du processus de soudage réalisé, à savoir si une liaison par soudure s'est produite essentiellement
- par un soudage par pression par résistance, ou
- par un soudage par pression à vapeur métallique lors duquel aucune lentille de soudage n'est produite.

2. Procédé selon la revendication 1, **caractérisé en ce que** l'identification du processus de soudage comporte le fait de déterminer

- si une lentille de soudage s'est formée et donc si une fusion s'est produite dans la zone d'assemblage des éléments à assembler (2, 4), ou
- si aucune lentille de soudage ne s'est formée et donc si une liaison des éléments à assembler (2, 4) dans la zone d'assemblage s'est produite par rapprochement à l'échelle atomique et en particulier s'est produite en formant de la vapeur métallique, lors duquel les éléments à assembler (2, 4) dans la zone d'assemblage ont d'abord été activés et se sont rapprochés à ce point sous l'action de la force de pression, et se sont reliés l'un à l'autre par des forces de liaison atomiques.

3. Procédé selon l'une des revendications précédentes, **caractérisé en ce que**, en fonction du processus de soudage qui a été identifié, un procédé de vérification pour vérifier la qualité de la liaison par soudure est sélectionné, et/ou **en ce que**, pour identifier le processus de soudage réalisé, au moins deux des états du système enregistrés sont représentés comme une courbe dans une courbe d'état.

4. Procédé selon l'une des revendications précédentes **caractérisé en ce que**

- pour identifier le processus de soudage réalisé comme états du système
- le courant de soudage ($I_s$) et
- la tension électrique à la zone d'assemblage entre les électrodes (12, 14) sont représentés dans une courbe d'état courant-tension commune et
- le processus de soudage est identifié et évalué en fonction de cette courbe d'état.

**5.** Procédé selon l'une des revendications précédentes, **caractérisé en ce qu'**après un processus de soudage, un autre processus de soudage est réalisé pour un autre ensemble d'éléments à assembler (6), dans lequel les ensembles d'éléments à assembler sont sensiblement identiques et au moins un paramètre de soudage est réglé en fonction du premier processus de soudage identifié afin d'améliorer l'autre processus de soudage par rapport au processus de soudage réalisé précédemment et/ou **en ce qu'**au moins un paramètre de soudage est réglé en fonction du fait qu'un soudage par pression par résistance ou un soudage par pression à vapeur métallique s'est produit.

**6.** Procédé selon l'une des revendications précédentes, **caractérisé en ce que** deux états du système sont représentés comme une courbe d'état, et qu'est évalué

- si la courbe d'état forme une boucle (37),
- à quelles valeurs d'état la courbe d'état se recoupe lorsqu'elle forme une boucle (37),
- quelle est l'importance de l'aire d'une boucle (37) de la courbe d'état, en particulier par rapport à l'aire d'une surface qui est comprise entre la courbe d'état et au moins un axe du système de coordonnées,
- à quelles valeurs d'un état du système des deux états du système l'autre état du système a une valeur maximale,
- à quelles valeurs d'état du système un état du système change le plus comparé à l'autre état du système et/ou
- à quelle valeur du courant de soudage ($I_s$) la tension électrique (Us) aux électrodes prend une valeur maximale lorsque le courant de soudage ($I_s$) et la tension électrique (Us) forment les deux états du système.

**7.** Procédé selon l'une des revendications précédentes, **caractérisé en ce qu'**une résistance électrique entre les deux électrodes est enregistrée comme au moins un état du système et, en particulier, une courbe de résistance est évaluée comme courbe temporelle de la résistance électrique et/ou **en ce que**, après une chute d'une ou de la courbe de résistance, une remontée de la courbe de résistance est évaluée et, en particulier, un maximum de la courbe de résistance est évalué après la remontée et/ou **en ce qu'**une valeur absolue d'un ou du maximum d'une ou de la courbe de résistance est évaluée, en particulier par rapport à une valeur minimale de la courbe de résistance après une ou la chute et avant le maximum.

**8.** Procédé selon l'une des revendications précédentes, **caractérisé en ce qu'**un rapport de résistance entre une valeur maximale de la courbe de résistance après une remontée et une valeur minimale de la courbe de résistance avant la remontée est formé et **en ce que**

- le processus de soudage réalisé est identifié comme soudage par pression par résistance si le rapport de résistance tombe en dessous d'une première valeur limite prédéterminée et
- le processus de soudage réalisé est identifié comme soudage par pression à vapeur métallique si le rapport de résistance dépasse une deuxième valeur limite prédéterminée, dans lequel la première et la deuxième valeur limite sont spécifiées de telle sorte que la deuxième valeur limite corresponde à la première valeur limite ou soit supérieure à celle-ci et/ou qu'une inclinaison ascendante d'une pente ascendante avant le maximum de la courbe de résistance et/ou une inclinaison descendante d'une pente descendante après le maximum soit évaluée si un soudage par pression à vapeur métallique a été identifié comme processus de soudage.

**9.** Procédé selon l'une des revendications précédentes, **caractérisé en ce que**

- entre une ou l'inclinaison ascendante de la courbe de résistance et une ou l'inclinaison descendante de la courbe de résistance, on détermine un angle de pente qui indique un angle entre la pente ascendante avant le maximum et la pente descendante après le maximum et qui est inférieur à 180°, et **en ce que**
- la taille de l'angle de pente est utilisée comme indicateur de la qualité du procédé de soudage par pression à vapeur métallique, en particulier **en ce que**
- une qualité de soudure suffisante est supposée lorsque l'angle de pente est inférieur à un angle de référence spécifié et supérieur à un angle limite spécifié.

**10.** Dispositif de contrôle pour contrôler un procédé de soudage électrique pour relier un ensemble d'éléments à assembler (6) constitué d'au moins deux éléments à assembler, dans lequel

- dans le procédé de soudage, un processus de soudage pour fabriquer une liaison par soudure est réalisé, lors duquel un courant de soudage ($I_s$) électrique circule au moyen de deux électrodes (12, 14) à travers une zone d'assemblage, disposée entre les électrodes (12, 14), des au moins deux éléments à assembler (2, 4) de l'ensemble d'éléments à assembler (6),

et le dispositif comprend

- un moyen d'enregistrement pour enregistrer au moins un état du système du processus de soudage et
- un dispositif d'évaluation pour identifier le processus de soudage réalisé en fonction de la courbe de l'au moins un état du système enregistré, **caractérisé en ce que**

l'identification du processus de soudage comporte le fait d'identifier le type du processus de soudage réalisé, à savoir si une liaison par soudure s'est produite essentiellement

- par un soudage par pression par résistance, ou
- par un soudage par pression à vapeur métallique lors duquel aucune lentille de soudage n'est produite.

11. Dispositif de réalisation et de contrôle d'un procédé de soudage électrique pour relier un ensemble d'éléments à assembler (6) constitué d'au moins deux éléments à assembler, comprenant :

- une source d'énergie électrique pour fournir un courant de soudage ($I_s$) électrique, en particulier avec une commande de soudage pour commander le déroulement du processus de soudage,
- deux électrodes (12, 14) pour conduire le courant de soudage ($I_s$) à travers une zone d'assemblage des au moins deux éléments à assembler (2, 4) pour réaliser un processus de soudage
- un système de force pour déplacer les électrodes servant à presser sur les pièces à assembler afin d'appliquer la pression d'électrode nécessaire, préalablement réglée et
- un dispositif de contrôle selon la revendication 10.

1

16

T1

17

Schweißsteuerung

Kraftsystem

15

Netzanschluss

Stromquelle

10

$I_S$

12

2

Auswertevorrichtung

8

$U_S$

4

19

Schweiß-
transformator

$I_S$

6

Erfassungsvorrichtung

14

18

## Fig. 1

Fig. 2

Fig. 3

Fig. 4

Fig. 5

Fig. 6

Fig. 7

Fig. 8

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2628561 A1
- WO 9845078 A1

- DE 69626429 T2